# FASCICULE DE BREVET EUROPEEN

(11) **EP 3 758 837 B1**
(45) Date de publication et mention de la délivrance du brevet: **27.04.2022**
(21) Numéro de dépôt: 19715144.2
(22) Date de dépôt: 26.02.2019
(51) Int. Cl.: B01J 20/12, B01J 20/32, C02F 1/28, C02F 101/00

(54) **MATÉRIAU HYBRIDE ORGANIQUE-INORGANIQUE APTE À ADSORBER DES CATIONS MÉTALLIQUES**
ZUR ABSORPTION VON METALLKATIONEN FÄHIGES, ORGANISCH-ANORGANISCHES HYBRIDMATERIAL
ORGANIC-INORGANIC HYBRID MATERIAL CAPABLE OF ABSORBING METAL CATIONS

(30) Priorité: 26.02.2018 FR 1851641
(43) Date de publication de la demande: 06.01.2021
(73) Titulaire: Onet Technologies ND, 13009 Marseille (FR); CENTRE NATIONAL DE LA RECHERCHE SCIENTIFIQUE -CNRS-, 75016 Paris (FR); Université de Haute-Alsace, 68093 Mulhouse Cedex (FR)
(72) Inventeur: AUGE, Grégoire, 13008 Marseille (FR); BRENDLE, Jocelyne, 68270 Wittenheim (FR); LIMOUSY, Lionel, 68720 Heidwiller (FR); THIEBAULT, Thomas, 68100 Mulhouse (FR)
(74) Mandataire: Cabinet Beau de Loménie
(86) Numéro de dépôt international: PCT/FR2019/050439
(87) Numéro de publication internationale: WO 2019/162638

(56) Documents cités:
- KR-A- 20170 130 804
- IWONA KUZNIARSKA-BIERNACKA ET AL: "Organo-Laponites as Novel Mesoporous Supports for Manganese(III) salen Catalysts", LANGMUIR, vol. 21, no. 23, 21 septembre 2005 (2005-09-21), pages 10825-10834, XP055536440, US ISSN: 0743-7463, DOI: 10.1021/la051619n
- TIAGO BORREGO ET AL: "Physicochemical characterization of silylated functionalized materials", JOURNAL OF COLLOID AND INTERFACE SCIENCE, vol. 344, no. 2, 18 janvier 2010 (2010-01-18), pages 603-610, XP055536190, US ISSN: 0021-9797, DOI: 10.1016/j.jcis.2010.01.026
- CHONGMIN LIU ET AL: "Enhancing the adsorption behavior and mechanism of Sr(II) by functionalized montmorillonite with different 3-aminopropyltriethoxysilane (APTES) ratios", RSC ADVANCES, vol. 6, no. 86, 2016, pages 83288-83295, XP055536495, ISSN: 2046-2069, DOI: 10.1039/C6RA19362E

## Description

La présente invention concerne un nouveau matériau argileux hybride organique-inorganique adsorbant apte à adsorber des cations radioactifs d'effluents nucléaire de Co, Cs et Sr ainsi qu'un procédé de décontamination d'effluent à l'aide d'un dit matériau hybride organique-inorganique adsorbant solide pour fixer sur le dit matériau hybride organique-inorganique des cations métalliques contenus dans le dit effluent, notamment un effluent nucléaire pour en isoler des radio-isotopes de cations Co, Sr et Cs en contenant.

La gestion des déchets radioactifs et notamment ceux issus de centrale nucléaire engendre des difficultés techniques bien connues. En particulier, dans le cas d'accident nucléaire comme celui de Tchernobyl, ou plus récemment celui de Fukushima, la contamination ne peut plus être gérée par la traditionnelle méthode qui consiste à excaver les zones contaminées ce qui pourrait être techniquement faisable mais économiquement inconcevable de par l'étendue des zones contaminées.

L'un des principaux challenges de ce type d'accident est de trouver un moyen d'isoler et de fixer la contamination, avant de la conditionner. La fixation doit donc d'être suffisamment durable pour ne pas être affectée par différents paramètres pouvant impacter le colis de déchet au fil des années. Or, du fait de la diffusion de la contamination dans l'environnement, les concentrations sont très faibles et il est délicat de prévoir l'écodynamique des radio-isotopes à ces concentrations-là.

Dans le cadre de la présente invention, trois radio-isotopes sont plus particulièrement considérés comme problématique, à savoir le ¹³⁷Cs, le ⁹⁰Sr et le ⁶⁰Co. Ces trois éléments présentent la particularité d'être présents sous la forme cationique dans une large gamme de pH (excepté pour le Co qui précipite à pH basique) dans leur environnement ce qui impacte fortement leur mode de transport et/ou de fixation.

Les argiles, du fait de leur capacité d'échange cationique, sont depuis longtemps des matériaux envisagés pour la fixation de ces éléments, mais également de bien d'autres tels les métaux lourds ou certains contaminants organiques persistants (Ghadiri et al., 2015; Uddin, 2017). De plus l'adsorption des radio-isotopes sur les minéraux argileux représente également un piège naturel pour ces éléments dans l'environnement (Mukai et al., 2016).

De nombreuses études ont déjà été menées pour déterminer les capacités d'adsorption de ces éléments sur différents types d'argiles naturelles ou modifiées (Gutierrez and Fuentes, 1991; Khan et al., 1995; Missana et al., 2008) et le potentiel des matériaux lamellaires, avec des résultats discordants (Jolin and Kaminski, 2016). On peut faire référence au document Chongmin Liu et al ( « Enhancing the adsorption behavior and mechanism of Sr(II) by functionalized montmorillonite with différent 3-aminopropyltriethoxysilane (APTES) ratios », RSC ADVANCES, vol. 6, no. 86, 2016) qui décrit la préparation d'une montmorillonite saturée en calcium modifiée (Mt) préparée à différentes charges de (3-aminopropyl) triéthoxysilane (APTES) par greffage et qui analyse la capacité d'adsorption du cation strontium (II) sur ces argiles modifiées.

Le traitement des déchets nucléaires repose en France sur des Règles Fondamentales de Sûreté et sur des Guides édictés par l'Autorité de Sûreté Nucléaire. Chaque exploitant a obligation de se conformer et se doit de respecter les critères établis en matière de radioprotection, de conception des colis pour le stockage des déchets nucléaires (exemple RFS III.2.f du 10 juin 1991). Notamment il doit apporter la démonstration que les différentes barrières physiques jouent entièrement leur rôle dans la protection de l'Environnement à long terme que ce soit le contenu, le « liant cimentaire » ou la nature physique du contenant. Il s'agit donc de montrer qu'aucune fuite de radionucléides dans l'Environnement n'est envisageable dans le temps.

Le but de la présente invention est donc de fournir un nouveau matériau argileux apte à isoler les cations métalliques d'un effluent nucléaire à l'aide du dit matériau solide et les immobiliser notamment dans une barrière physique au sens de ladite règlementation sur le confinement des déchets radioactifs nucléaires, en augmentant et/ou différentiant les propriétés d'adsorption vis-à-vis des différents cations métalliques d'effluent nucléaire et garantissant la pérennité de cette adsorption par rapport aux matériaux connus de ce type, obtenus à partir d'une argile au moins vis à vis de certains radio-isotopes cationiques, notamment des cations radioactifs d'effluents nucléaires tels que les radio-isotopes de cations de Co, Cs et Sr voire dans des conditions extrêmes (pH très basique ou très acide) pouvant être rencontrées dans les effluents industriels à traiter.

Un autre but est de fournir des matériaux de ce type qui soient de fabrication aisée et utilisation adaptée dans des conditions de mise en œuvre industrielle.

Pour ce faire, la présente invention fournit un matériau hybride organique-inorganique adsorbant apte à adsorber des cations métalliques, de préférence des cations métalliques radioactifs d'effluents nucléaire de Co, Cs et Sr, le dit matériau hybride comprenant un support d'argile à structure lamellaire comprenant des nanoparticules en forme de feuillets multicouches avec des cations Na⁺ dans les espaces entre les dites nanoparticules en liaisons électrostatiques avec des charges négatives de dites nanoparticules, dénommés espaces interfoliaires, les dites nanoparticules étant constituées chacune de plusieurs couches empilées dont au moins une couche de composés de Si, et au moins une couche comprenant des dites charges négatives, caractérisé en ce que ledit matériau comprend un support d'argile à structure lamellaire de formule Na_{0.7}[(Mg_{5.5}, Li_{0.3})Si₄O₁₀(OH)₂]₂ constitué de dites nanoparticules en forme de feuillets multicouches constitués chacun de 3 couches empilées dont une couche dénommée octaédrique de composés (Mg,Li)O₆ comprenant des dites charges négatives, disposée entre deux couches dénommées tétraédriques de composés SiO₄ , la dite argile étant modifiée chimiquement par :
greffage d'au moins un greffon comprenant au moins une molécule organique apte à établir une liaison covalente avec un atome Si d'une dite couche de nanoparticule, et comprenant en outre au moins un groupe organique fonctionnel apte à complexer un dit cation métallique d'effluent, dans lequel ledit greffon comprend un reste de molécule organique R-Si (OR')₃ dans lequel:
   (a) le groupe silyle de formule -Si (OR')₃ comprend au moins l'un des R' qui est un groupe apte à être hydrolysé pour qu'au moins un atome O du dit groupe silyle soit engagé dans une dite liaison covalente Si-O-Si, et
   (b) R est un alkyle ou aryle substitué par au moins un groupe -NH₂,
ledit matériau présentant un taux de greffage de dits greffons sur le support d'argile de 0.1 à 0.55 mmole/g mesuré par thermogravimétrie sous atmosphère d'air et une augmentation de la température de l'ordre de 2°C par minute de 30 à 900°C.

Plus particulièrement encore, ce sont une pluralité de dits groupements fonctionnels de respectivement une pluralité dits greffons qui sont aptes à complexer les dits cations métalliques d'effluents, notamment les cations de Co.

Dans le support d'argile de formule Na0.7[(Mg5.5, Li0.3)Si₄O₁₀(OH)2]₂ (ci-après abrégée en LAP), dans cette couche octaédrique, une partie du magnésium est substitué par du lithium induisant des dites charges négatives, ces charges négatives permettant une liaison ionique avec des cations Na⁺ qui se logent dans l'espace interfoliaire. Plus particulièrement, la structure de la LAP est constituée par un empilement de feuillets de type T:0:T encore noté 2:1, dans lesquels une couche d'octaèdres comportant des cations Mg²⁺et Li⁺ est entourée de deux couches tétraédriques comportant des cations Si⁴⁺, la substitution partielle de Mg²⁺ par Li⁺ induisant un déficit de charges qui est compensé par des cations Na⁺ se logeant dans l'espace interfolaire.

La LAP comporte des groupements silanol (SiOH) en bordures et à la surface des feuillets et on comprend donc que le dit greffage se fait sur les sites de bordures et sur la surface de la dite couche tétraédrique.

Plus particulièrement, les nanoparticules de base ou feuillets de base (non agglomérées) de LAP se présentent avant modification selon la présente invention, sous la forme de disques de diamètre d'environ 25 nm et environ 1nm d'épaisseur. Ces dites nanoparticules modifiées par greffage peuvent s'agglomérer en particules de plus grandes tailles, l'agglomération des dites nanoparticules résultant des liaisons entre nanoparticules résultant du dit greffage de molécules organiques. Une particule de dit matériau peut ainsi comprendre de 2 à 10⁶ nanoparticules agglomérées correspondant à une taille de dite particules de 25 nm à 20 µm.

Le dit matériau hybride selon la présente invention est avantageux en ce qu'il permet d'une part de décontaminer un effluent radioactif, notamment de centrale nucléaire, en fixant les cations métalliques radioactifs et plus particulièrement les cations Co tout en les retenant fixés au dit matériau suffisamment pour constituer une barrière d'immobilisation apte à être conditionnée dans un fut métallique de déchets radioactifs.

Le greffon comprend au moins un groupe silyle comprenant un atome Si engagé (après greffage) dans une liaison covalente de type Si-O-Si avec un atome Si d'un groupe SiOH d'une dite couche tétraédrique des dits feuillets multicouches, notamment d'un groupe SiOH en bordure ou surface d'une dite couche tétraédrique.

Un même dit greffon peut être greffé sur deux couches tétraédriques de deux dits feuillets adjacents et/ou par plusieurs liaisons covalentes sur la même couche tétraédrique d'un même dit feuillet ou sur une couche tétraédrique d'un autre feuillet.

Le greffon comprend au moins un groupe silyle comprenant un atome Si engagé dans une liaison covalente de type Si-O-Si avec un atome Si d'un autre dit greffon. Ledit autre greffon peut être greffé sur la même couche tétraédrique d'un même dit feuillet ou sur une couche tétraédrique d'un autre feuillet.

De préférence R' est un alkyle, de préférence encore alkyl en C1 ou C2.

Le groupe NH₂ correspond au dit groupe fonctionnel du greffon apte à complexer un cation métallique, notamment un cation de Co.

Plus particulièrement encore, ledit greffon a pour formule NH₂-alk-Si(OR')₃, R' étant des groupes alkyle identiques ou différents en C1 ou C2 et alk étant un alkyle en C1 à C7, de préférence en C2 ou C3.

Un même greffon peut se greffer par liaison(s) Si-O-Si via 1, 2 ou 3 groupes OR' sur respectivement 1, 2 ou 3 atomes Si d'une même couche T d'un même feuillet, atome Si de groupe SiOH en surface externe ou de préférence en bordure, ou de deux couches T différentes d'un même feuillet ou de deux couches T de deux feuillets adjacents.

Plus particulièrement encore, ledit greffon est un reste de 3-aminopropyl-triéthoxysilane.

Le taux de greffage de dits greffons sur la Lap est de 0.1 à 0.55 mmole/g (mmole de molécule de greffon/ g de dit support de LAP de base).

Selon un aspect préféré, la présente invention concerne un matériau hybride organique-inorganique adsorbant apte à adsorber des cations métalliques, de préférence des cations métalliques radioactifs d'effluents nucléaire de Co, Cs et Sr, le dit matériau hybride comprenant un support d'argile à structure lamellaire comprenant des nanoparticules en forme de feuillets multicouches avec des cations Na⁺ dans les espaces entre les dites nanoparticules en liaisons électrostatiques avec des charges négatives de dites nanoparticules, dénommés espaces interfoliaires, les dites nanoparticules étant constituées chacune de plusieurs couches empilées dont au moins une couche de composés de Si, et au moins une couche comprenant des dites charges négatives, caractérisé en ce que ledit matériau comprend un support d'argile à structure lamellaire de formule Na_{0.7}[(Mg_{5.5}, Li_{0.3})Si₄O₁₀(OH)₂]₂ constitué de dites nanoparticules en forme de feuillets multicouches constitués chacun de 3 couches empilées dont une couche dénommée octaédrique de composés (Mg,Li)O₆ comprenant des dites charges négatives, disposée entre deux couches dénommées tétraédriques de composés SiO₄ , la dite argile étant modifiée chimiquement par :
greffage d'au moins un greffon comprenant au moins une molécule organique apte à établir une liaison covalente avec un atome Si d'une dite couche de nanoparticule, et comprenant en outre au moins un groupe organique fonctionnel apte à complexer un dit cation métallique d'effluent, dans lequel ledit greffon comprend un reste de molécule organique R-Si (OR')3 dans lequel:
(a) le groupe silyle de formule -Si (OR')3 comprend au moins l'un des R' qui est un groupe apte à être hydrolysé pour qu'au moins atome O du dit groupe silyle soit engagé dans une dite liaison covalente Si-O-Si, et
(b) R est un alkyle ou aryle substitué par au moins un groupe -NH2, ledit matériau présentant un taux de greffage de dits greffons sur le support d'argile de 0.1 à 0.55 mmole/g mesuré par thermogravimétrie sous atmosphère d'air et une augmentation de la température de l'ordre de 2°C par minute de 30 à 900°C.

De préférence R' est un alkyle, de préférence encore alkyl en C1 ou C2.

Le groupe NH₂ correspond au dit groupe fonctionnel du greffon apte à complexer un cation métallique, notamment un cation de Co.

Plus particulièrement encore, ledit greffon a pour formule NH₂-alk-Si(OR')₃, R' étant des groupes alkyle identiques ou différents en C1 ou C2 et alk étant un alkyle en C1 à C7, de préférence en C2 ou C3.

Un même greffon peut se greffer par liaison(s) Si-O-Si via 1, 2 ou 3 groupes OR' sur respectivement 1, 2 ou 3 atomes Si d'une même couche T d'un même feuillet, atome Si de groupe SiOH en surface externe ou de préférence en bordure, ou de deux couches T différentes d'un même feuillet ou de deux couches T de deux feuillets adjacents.

Plus particulièrement encore, ledit greffon est un reste de 3-aminopropyl-triéthoxysilane.

Selon un aspect particulier de l'invention, le matériau hybride organique-inorganique adsorbant selon l'invention est caractérisé en ce que la dite argile est modifiée chimiquement par intercalation dans l'espace interfoliaire entre deux dites nanoparticules d'au moins une molécule organique d'agent intercalant comprenant un groupe organique cationique établissant une liaison électrostatique avec une charge négative d'une dite couche de nanoparticule et un groupe organique anionique apte à établir une liaison ionique avec un dit cation métallique d'effluent.

La molécule d'agent intercalant comprend un groupe organique cationique apte à établir une liaison par interaction électrostatique non directionnelle avec une charge négative d'une couche dudit feuillet en se substituant à un cation Na⁺ du dit espace interfoliaire par échange ionique avec le dit cation Na⁺.

L'agent intercalant est une molécule tensioactive amphotère comprenant une chaine hydrocarbonée en C7 à C14 comprenant au moins un dit groupe anionique apte à établir une liaison ionique avec un dit cation métallique d'effluent et au moins un dit groupe cationique établissant une liaison électrostatique avec une charge négative de dite nanoparticule.

Plus particulièrement, la dite molécule d'agent intercalant est une molécule tensioactive comprenant une chaine hydrocarbonée en C7 à C14 comprenant au moins un dit groupe organique anionique carboxylate COO⁻ et au moins au moins un dit groupe organique cationique qui comprend un groupe amine quaternaire.

Plus particulièrement encore, la dite molécule d'agent intercalant est alkyl-amido-alkyl de betaïne de formule alk1-CONH-alk2-N⁺(R₁,R₂)-COO⁻, alk1 étant un alkyle en C7 à C14 et alk2 étant un alkyle en C1 à C7, R₁,R₂ étant des groupes alkyle en C1 à C7.

Plus particulièrement encore, la dite molécule d'agent intercalant est la coca amido propyl de betaïne (ci-après appelé CAB) CH₃-(CH₂)₁₀-CONH-(CH₂)₃-N⁺(CH₃)₂-COO⁻.

Plus particulièrement, le taux d'intercalation de dite molécule d'agent intercalant dans la LAP est de 0.1 à 1.5 mmole/g (mmole de molécule d'agent intercalant/ g de dit support de LAP de base).

Plus particulièrement encore, dans un mode de réalisation préféré, le dit matériau hybride comprend une dite argile modifiée uniquement par un dit greffage d'une pluralité de dits greffons identiques, c'est-à-dire sans intercalation d'agent tensioactif.

Dans un mode de réalisation avantageux, le matériau hybride organique-inorganique adsorbant modifié par greffage d'au moins un greffon selon la présente invention, est également modifié chimiquement par intercalation dans l'espace interfoliaire entre deux dites nanoparticules d'au moins une molécule organique d'agent intercalant comprenant un groupe organique cationique établissant une liaison électrostatique avec une charge négative d'une dite couche de nanoparticule et un groupe organique anionique apte à établir une liaison ionique avec un dit cation métallique d'effluent.

Dans un autre mode de réalisation avantageux encore, le dit matériau hybride comprend un mélange de :
(a) une dite argile modifiée par un dit greffage d'une pluralité de dits greffons, et
(b) une dite argile modifiée par une dite intercalation d'au moins un agent intercalant.

On peut en effet, avantageusement utiliser les deux hybrides d'hybrides car les interactions entre le dit greffon et la dite molécule d'agent intercalant d'une part, et la LAP d'autre part ne se font pas sur les même sites d'adsorption, ce qui permet donc de maximiser le potentiel d'adsorption de la LAP en la fonctionnalisant de façon duale.

Plus particulièrement encore, les dites particules de nanoparticules agglomérées sont de tailles de 25 nm à 20 µm et peuvent être mises en forme sous forme de billes ou de pastilles de plus grandes tailles que les agglomérats.

La présente demande décrit un procédé de décontamination d'effluent à l'aide d'un matériau hybride organique-inorganique adsorbant solide selon l'invention dans lequel on met en contact le dit effluent à décontaminer avec le dit matériau hybride pour fixer par adsorption sur le dit matériau hybride des cations métalliques contenus dans le dit effluent, de préférence des isotope radioactif de cations de Co, Cs et Sr.

Selon un aspect, le dit effluent est mis en contact avec le dit matériau hybride adsorbant pendant une durée de pas plus de 5 minutes pour fixer au moins 0.01 à 1.5 mmoles de cations/g de dit matériau hybride.

Selon un aspect, la dite solution d'effluent est un effluent de l'industrie nucléaire et ledit cation polluant métallique que l'on fixe est un isotope radioactif de cations de Co ou Sr, de préférence encore Co.

Selon un aspect, le dit effluent est à un pH de 7 à 8 afin d'optimiser la capacité d'adsorption du matériau ainsi que la forme sous laquelle les adsorbats se trouvent en solution (spéciation des cations radioactifs).

L'adsorption des cations des effluents à décontaminer se fait par échange d'ions avec les cations Na⁺ au niveau interfoliaire et/ou par complexation par les groupes organiques complexant des greffons ou agents intercalants.

Alors que pour la LAP brute, l'adsorption est décroissante avec Sr > > Co = Cs, pour la LAP modifiée par greffage l'adsorption est décroissante avec Co > > Sr > Cs, et pour la LAP modifiée par intercalation l'adsorption est décroissante avec Co > Sr > Cs.

L'adsorbant qui permet d'obtenir les concentrations adsorbées les plus élevées est la LAP modifiée par greffage. A l'inverse l'adsorption la plus faible est obtenue pour la LAP non fonctionnalisée ou LAP brute. La LAP modifiée par intercalation a donc des propriétés d'adsorption intermédiaires. Ainsi, les deux matériaux hybrides de l'invention, et surtout la LAP modifiée par greffage, représentent des matériaux avec des propriétés d'adsorption du Co significativement meilleures que les autres matériaux argileux décrits dans la littérature, avec des pourcentages adsorbés importants, notamment 99% pour les cations de Co (pour des concentrations initiales de 4.2 à 420 µM) et 80% pour les cations de Sr (pour des concentrations initiales de 3.7 à 370 µM), et ce en moins de 5 minutes pour les deux types de matériaux hybrides selon l'invention avec donc des capacités d'adsorption différentiées selon le type d'hybride et selon le type de radionucléide et améliorées par rapport à la LAP non fonctionnalisée.

Que ce soit sur la LAP modifiée par greffage ou la LAP modifiée par intercalation, l'adsorption du Co est la plus importante. En particulier, avec la LAP modifiée par greffage, pour le Co, aucun effet de compétition n'est observé avec les autres cations métalliques. La LAP modifiée par intercalation présente les quantités adsorbées cumulées les plus importantes à faibles concentrations initiales (de 1 à 50 µM) de cations métalliques avec les trois cations de Co, Sr et Cs.

Pour tous les matériaux hybrides adsorbants selon l'invention et tous les adsorbats de cations métalliques, une adsorption significativement plus importante est observée pour des valeurs de pH basiques. La seule exception est l'adsorption du Co sur la LAP modifiée par greffage, très faiblement impactée par la valeur du pH.

La présente invention concerne également un procédé de détection de la présence de cations métalliques radioactifs, de préférence d'isotopes radioactifs de cations de Co, Cs et Sr, dans un effluent à l'aide d'un matériau hybride organique inorganique adsorbant solide selon la présente invention, dans lequel l'effluent à analyser est mis en contact avec le dit matériau hybride et dans lequel la présence de cations métalliques radioactifs dans ledit effluent est détectée par un changement de couleur dudit matériau du blanc au orange visible à l'œil nu.

L'Homme du métier pourra utiliser toute autre technique de mesure instrumentale pour la détection du changement de couleur du matériau hybride organique-inorganique applicable dans le cadre de la présente invention.

L'intensité du changement de couleur est proportionnelle à la quantité de cations métalliques radioactifs, de préférence des radioactifs de cations de Co, Cs et Sr présents dans l'effluent.

De préférence, le matériau hybride organique inorganique adsorbant solide mis en œuvre dans le procédé de détection est un matériau hybride organique-inorganique adsorbant apte à adsorber des cations métalliques, de préférence des cations métalliques radioactifs d'effluents nucléaire de Co, Cs et Sr, le dit matériau hybride comprenant un support d'argile à structure lamellaire comprenant des nanoparticules en forme de feuillets multicouches avec des cations Na+ dans les espaces entre les dites nanoparticules en liaisons électrostatiques avec des charges négatives de dites nanoparticules, dénommés espaces interfoliaires, les dites nanoparticules étant constituées chacune de plusieurs couches empilées dont au moins une couche de composés de Si, et au moins une couche comprenant des dites charges négatives, caractérisé en ce que la dite argile est modifiée chimiquement par greffage d'au moins un greffon comprenant au moins une molécule organique apte à établir une liaison covalente avec un atome Si d'une dite couche de nanoparticule, et comprenant en outre au moins un groupe organique fonctionnel apte à complexer un dit cation métallique d'effluent, ledit matériau étant tel que défini précédemment selon le premier mode de réalisation par greffage.

De préférence encore, le dit matériau hybride organique-inorganique adsorbant comprend un support d'argile de formule Na0.7[(Mg5.5, Li0.3)Si₄O₁₀(OH)2]₂ (ci-après abrégée en LAP) constitué de dites nanoparticules en forme de feuillets multicouches constituées chacun de 3 couches empilées dont une couche dénommée octaédrique de composés (Mg,Li)O₆ comprenant des dites charges négatives, disposée entre deux couches dénommées tétraédriques de composés SiO₄ et le greffon est un reste de 3-aminopropyl-triéthoxysilane.

De façon encore préférée, le taux de greffage de dits greffons sur la LAP est de 0.1 à 0.55 mmole/g (mmole de molécule de greffon/ g de dit support de LAP de base).

Plus particulièrement, l'effluent pour lequel la présence de cations métalliques radioactifs, de préférence des isotopes radioactifs de cations de Co, Cs et Sr doit être détectée est mis en contact avec le dit matériau hybride adsorbant pendant une durée d'environ 5 à 10 min, de préférence de pas plus de 5 min.

Le procédé de détection peut être réalisé en amont, en même temps et / ou après le procédé de décontamination selon la présente invention par exemple afin de déterminer l'efficacité du procédé de décontamination. L'efficacité du procédé de décontamination peut par exemple être déterminée par la détection de cations métalliques radioactifs, de préférence des isotopes radioactifs de cations de Co, Cs et Sr présents dans l'effluent après la mise en œuvre du procédé de décontamination en visualisant la couleur du matériau hybride mis en contact avec l'effluent avant et après le procédé de décontamination.

Ainsi, la présente invention concerne également un procédé de décontamination d'effluent et / ou de détection de cations métalliques radioactifs, de préférence des isotopes radioactifs de cations de Co, Cs et Sr dans ledit effluent à l'aide d'un matériau hybride organique-inorganique adsorbant solide selon l'invention dans lequel on met en contact le dit effluent avec le dit matériau hybride pour fixer par adsorption sur le dit matériau hybride des cations métalliques contenus dans le dit effluent, de préférence des isotopes radioactifs de cations de Co, Cs et Sr et dans lequel la présence de cations métalliques radioactifs dans ledit effluent est détectée par un changement de couleur dudit matériau du blanc au orange visible à l'œil nu.

Ainsi, la présente invention fournit un procédé de suivi en temps réel de la décontamination de cations métalliques radioactifs, de préférence des isotopes radioactifs de cations de Co, Cs et Sr d'un effluent dans lequel la présence de cations métalliques radioactifs est déterminée par un changement de couleur dudit effluent du blanc au orange visible à l'œil nu ou par toute autre technique de mesure instrumentale.

La présente invention fournit également un procédé de traitement d'une solution d'effluent contenant un cation polluant minéral caractérisé en ce que l'on met la dite solution d'effluent en contact avec un matériau hybride adsorbant selon l'invention pour décontaminer la dite solution d'effluent, de préférence ledit cation polluant métallique étant choisi au moins parmi Co, Sr et Cs.

De façon connue, le matériau hybride adsorbant selon l'invention peut être conditionné sous forme d'une membrane ou d'une colonne à travers lesquelles on fait passer l'effluent. La mise en contact peut se faire par injection sous pression à travers la membrane ou filtration à pression atmosphérique à travers une colonne mélangeant sable et matériau hybride selon l'invention.

Plus particulièrement, la dite solution d'effluent est un effluent de l'industrie nucléaire et ledit cation polluant métallique est choisi parmi Co, Sr, Cs, Ag, Ru, Fe, Sb, Cr, Mg, Mn, Ni et Ti et leurs isotopes radioactifs , notamment Co, Sr, Cs, aux degrés d'oxydation suivants : Co(IV), Co(III), Co(II), Cs(I) et Sr (II).

De préférence, la dite solution d'effluent est un effluent de l'industrie nucléaire et ledit cation polluant minéral est un isotope radioactif de cations de Co et Sr, de préférence encore Co.

Le déchet brut contenant le dit matériau hybride selon l'invention avec les dits cations radioactifs fixés sur le dit matériau hybride selon l'invention peut être immobilisé sous forme de bloc solide conditionné dans un conteneur, vérifiant les critères requis pour que ce déchet radioactif soit accepté dans un centre de stockage définitif notamment en termes de résistance à la lixiviation et à la compression:
- soit sous forme de bloc massif de dit matériau hybride selon l'invention avec les dits cations radioactifs fixés conditionné au sein d'une enveloppe de béton ou de matériau synthétique constituant une deuxième barrière physique, ou
- soit sous forme de bloc massif d'une matrice cimentaire, ou dans une matrice polymère au sein de laquelle le dit matériau de déchet est dispersé.

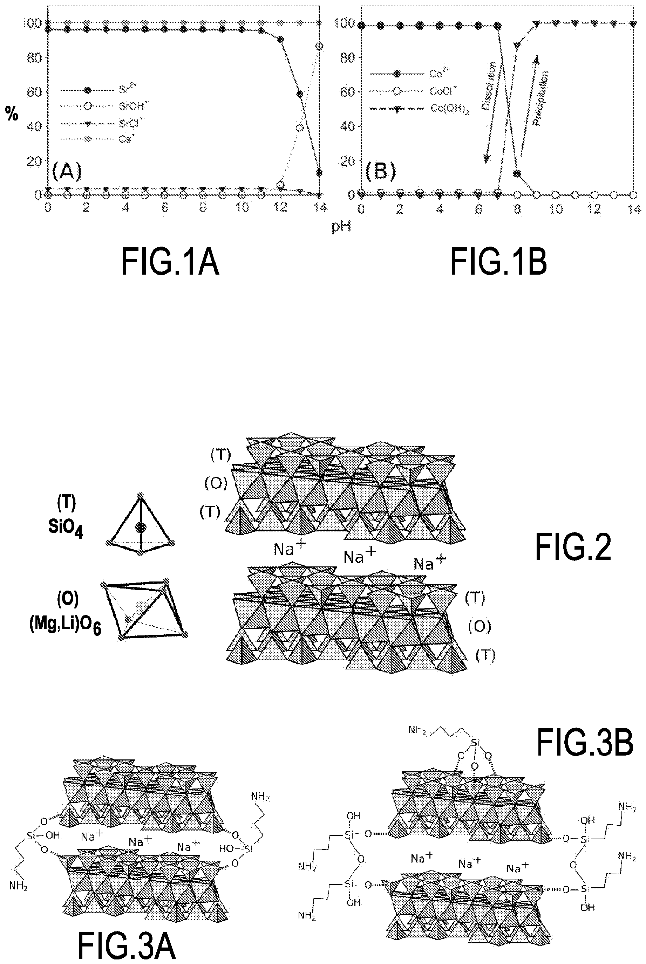

D'autres caractéristiques et avantages de la présente invention apparaitront à la lumière de la description et des exemples détaillés qui vont suivre en référence aux figures 1 à 20. Les éléments de la partie expérimentale, relatifs à un matériau hybride organique-inorganique adsorbant dans lequel l'argile est modifiée chimiquement uniquement par intercalation dans l'espace interfoliaire d'au moins une molécule organique d'agent intercalant, ne font pas partie de la présente invention.
Les figures 1A et 1B montrent la spéciation du Sr, Cs (fig.1A) et Co (fig.1B) en fonction du pH en abscisses avec les % de concentrations totales en ordonnées.
La figure 2 montre la structure TOT de la LAP avec deux feuillets constitués de deux unités ou nanoparticules-de base constituées deux couches tétraédriques entourant une couche octaédrique, l'espace entre ces deux feuillets (espace interfolaire) et les dimensions (épaisseur et longueur) des feuillets TOT.
La figure 3 montre des arrangements possibles après greffage de la LAP avec de l'APTES, avec en (A) et (B) deux modes d'arrangement envisageables sur les sites de bordures, et un greffage sur un site de surface
La figure 4 montre la LAP (gauche) et l'hybride de LAP intercalée avec du CAB (droite).
La figure 5 montre des diffractogrammes de rayons X de la LAP et des deux hybrides synthétisés (LAP-CAB et LAP-APTES), les chiffres entre parenthèses correspondent aux plans hkl avec l'intensité (c.p.s.) en ordonnée.
La figure 6 montre les arrangements possibles du CAB au sein de la LAP en fonction du ratio utilisé lors de la synthèse de l'hybride, avec (1) une monocouche latérale parallèle entre deux feuillets, (2) une bicouche/tricouche de CAB parallèles entre deux feuillets et (3) une structure paraffinique transversale entre deux feuillets, avec la distance basale (épaisseur du feuillet + distance interfoliaire) en ordonnées et le ratio CAB/argile en CEC (capacité d'échange ionique) en abscisse.
La figure 7 montre des spectres IRTF de la LAP, de la LAP-APTES et de la LAP-CAB obtenus après synthèse pour les gammes de nombres d'onde 2500-3700 cm⁻¹ (fig.7A) et 400-1600 cm⁻¹ (fig.7B) avec la transmittance en ordonnée.
La figure 8 montre des spectres RMN du solide du ²⁹Si de la LAP et de la LAP-APTES.
La figure 9 montre la cinétique d'adsorption avec l'évolution du % adsorbé de Co, Sr et Cs adsorbé sur la LAP APTES (abscisse) en fonction du temps (ordonnée).
Les figures 10 à 12 représentent des isothermes d'adsorption des cations de Sr, Cs et Co respectivement sur la LAP et les deux matériaux hybrides de l'invention, les lignes pointillées représentent les modélisations obtenues.
Les figures 13 à 15 représentent des isothermes d'adsorption des trois radionucléides utilisés (Sr, Co et Cs) en solution mono-moléculaire (symboles ouverts) ou en compétition entre eux (symboles fermés) sur la LAP, la LAP-APTES et la LAP-CAB.

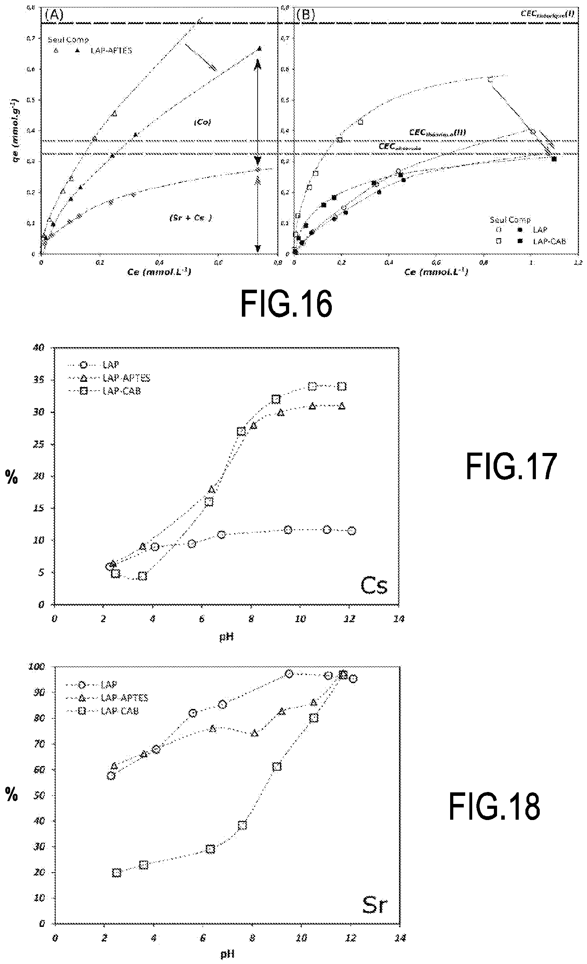

La figure 16 représente l'adsorption cumulée des trois radionucléides par addition des concentrations adsorbées lors des interactions mono-moléculaires (symboles ouverts) ou compétitives (symboles fermés) sur les trois adsorbants, en (A), l'adsorption sur la LAP-APTES avec q(Cs+Sr) représentée par les losanges gris, en (B) l'adsorption sur la LAP et la LAP-CAB, la ligne pointillée épaisse en gras représente la capacité d'échange cationique (CEC) théorique de la LAP pour un cation monovalent (I), en trait fin, la CEC théorique de la LAP pour un cation divalent (II), en gris clair, la CEC observée pour les trois matériaux.
Les figures 17 à 19 représentent l'effet du pH (en abscisse) sur le % adsorbé de Cs, Sr et respectivement Co (en ordonnée) sur la LAP et les deux matériaux hybrides de l'invention. Sur la figure 19, les losanges orange représentent le Co seul, sans adsorbant ajouté.
Les figures 20A et 20B représentent des spectres IRTF de la LAP-APTES (fig.20A) et de la LAP-CAB (fig.20B) brutes puis en interaction avec une solution contenant du Co/Cs/Sr en compétition à des pHs croissants (2, 8 et 12).
La figure 21 représente des diffractogrammes de rayons X de la LAP et de différents hybrides greffés de l'exemple 2 (APTES4, APTES4(+NaOH) et APTES10), les nombres entre parenthèses correspondent aux plans (hkl) des principales réflexions observées.
La figure 22 représente des diffractogrammes de rayons X des hybrides greffés pour 4 rapports solide/liquide différents de l'exemple 2, les chiffres entre parenthèses correspondent aux plans (hkl) des principales réflexions observées
La figure 23 représente des spectres IRTF de la LAP et de quatre hybrides greffés de l'exemple 2 obtenus après synthèse pour les domaines de nombre d'onde allant de 2500 à 3700 cm⁻¹ (A) et de 400 à 1600 cm⁻¹ (B).
La figure 24 représente des spectres IRTF des hybrides greffés de l'exemple 2 à des rapports solide/liquide variables pour les domaines de nombre d'onde allant de 2500 à 3700 cm⁻¹ (A) et de 400 à 1600 cm⁻¹ (B).
La figure 25 représente l'analyse thermogravimétrique de la LAP, LAP-CAB, APTES4, APTES4(+NaOH) et APTES10 de l'exemple 2 avec le % de perte de masse en ordonnée.
La figure 26 représente l'analyse thermogravimétrique des hybrides greffés à des rapports solide/liquide variables de l'exemple 2.
La figure 27 représente les spectres de RMN du ²⁹Si de la LAP et des quatre hybrides greffés de l'exemple 2: les différents spectres ont été mis à l'échelle en prenant comme référence (100%) la résonance associée aux sites Q3 des différents matériaux lamellaires.
La figure 28 représente des spectres de RMN du ¹H de la LAP et des quatre hybrides greffés, les différents spectres ont été mis à la même échelle en prenant comme référence (100%) les deux résonances associées à la LAP, à 0.3 et -0.5 ppm.
La figure 29 représente les spectres de RMN du ¹H de la LAP et de la LAP-CAB.
La figure 30 représente les capacités d'adsorption en fonction du volume de solution (250, 100 et 50 mL) pour quatre adsorbants de l'exemple 2, en présence d'ions seuls (Sr et Co) ou en compétition (Cs, Sr et Co).
La figure 31 représente les isothermes d'adsorption des trois radionucléides utilisés (Cs, Co et Sr) en solution mono-moléculaire sur l'APTES4 et l'APTES10.
La figure 32 représente les isothermes d'adsorption des trois radionucléides utilisés (Cs, Co et Sr) en compétition sur trois hybrides greffés de l'exemple 2.
La figure 33 représente les isothermes d'adsorption des trois radionucléides utilisés (Cs, Co et Sr) en compétition sur les quatre hybrides greffés à des rapports solide/liquide variables.
La figure 34 représente le pourcentage de cations désorbés/relargués en fonction de la solution utilisée (Eau pure, 0.2 et 2 mM de Na, 0.1 et 1mM de Ca) pour quatre matériaux adsorbants de l'exemple 2 et chacun des radionucléides en compétition.
La figure 35 représente le pourcentage de Co désorbé en fonction de la composition de la solution de relargage pour les quatre matériaux adsorbants après adsorption de Co seul (barres en gras) ou en compétition (barres claires)
La figure 36 représente les diffractogrammes de rayons X de la MMT-KSF et de son hybride greffé, les chiffres entre parenthèses correspondent aux plans hkl des principales réflexions observées.
La figure 37 représente les spectres IRTF de la montmorillonite MMT-KSF et de la MMT-KSF greffée de l'exemple 2 obtenus après synthèse pour les domaines de nombre d'onde allant de 2500 à 3700 cm⁻¹ (A) et de 400 à 1600 cm⁻¹ (B)
La figure 38 représente les isothermes d'adsorption des trois radionucléides utilisés en compétition sur la montmorillonite MMT-KSF et la MMT-KSF-APTES4.
La figure 39 représente les diffractogrammes des rayons X des différents échantillons de matériau hybride correspondant à laponite modifiée par greffage avec un APTES, suite à leur irradiation par faisceau d'électrons (les références numériques 1 et 4 correspondent aux échantillons soumis aux irradiations 53,4 kGy et 208,2 kGy, la référence 2 correspond à l'échantillon non irradié et la référence 3 correspond à l'échantillon irradié à 156,1 kGy) ainsi que de l'échantillon non irradié.

### EXEMPLE 1

### I) Matériel et méthodes

### A) Les adsorbats

Trois isotopes stables des radionucléides ont été utilisés sous forme de sel avec un contre-ion similaire, l'ion chlorure. Les formules des trois sels pour le Co, le Cs et le Sr sont respectivement, CoCl₂.6H₂O, SrCl₂.6H₂O et CsCl. La spéciation des trois éléments sélectionnés est affectée de manière contrastée par les modifications de pH. En effet si le Cs reste sous la forme Cs⁺ dans toute la gamme de pH, une faible partie du Sr est présente sous forme SrCl⁺, tandis que Sr²⁺ est très largement majoritaire dans une large gamme de pH (i.e. 1-12), excepté pour les valeurs de pH très basiques, pour lesquelles l'espèce majoritaire correspond à l'espèce SrOH⁺ (Figure 1A).

Pour le Co, le pH joue un rôle central dans sa spéciation (Figure 1B). A pH acide, l'espèce très majoritaire est l'ion Co²⁺, tandis que pour les valeurs de pH supérieurs à 7, l'espèce majoritaire correspond à Co(OH)₂, espèce qui précipite, le cobalt n'est donc plus en solution.

### B) Les adsorbants

1) Une argile brute a structure lamellaire ou en feuillets a été sélectionnée pour tester ses propriétés d'adsorption est la Laponite^{®}. On a utilisé la laponite RD^{®}, commercialisée par la société BYK (DK) désignée par l'acronyme LAP par la suite. La laponite^{®} est une hectorite de synthèse dont la composition chimique et les propriétés afférentes sont stables d'un lot à un autre, ce qui n'est pas toujours le cas pour les argiles naturelles.

La formule structurale de la LAP s'écrit Na0.7[(Mg5.5, Li0.3)Si4O10(OH)2]2. C'est une argile de type TOT ou 2 :1 à savoir que les nanoparticules de base agglomérées qui la constitue sont sous forme de feuillet composé de trois couches empilées avec deux couches tétraédriques (T) constituées de tétraèdres de SiO₄ et d'une couche octaédrique (O) constituées d'octaèdres de (Mg, LI)O₆ intercalée entre les deux couches tétraédriques (T).

Sur la Figure 2, on a représenté des unités de base ou feuillet, ces nanoparticules ont une forme de pastille ou disque de 25nm de diamètre et une épaisseur de 0.92nm.

La laponite^{®} fait partie de la famille des smectites, phyllosilicates 2 :1 ayant des propriétés de gonflement. Les substitutions en couche octaédrique d'une partie du magnésium par du lithium induisent des charges négatives résultant d'un déficit de charge positives, ces charges négatives étant compensées par des cations Na⁺ qui se logent dans l'espace interfoliaire (Figure 2). Ce déficit de charge conduit à une capacité d'échange cationique (CEC) de 75 meq.100g-1 ce qui correspond à 0.75 mmol de Na pour 100 g de LAP.

### 2) Fonctionnalisation organique de la LAP

La LAP a donc été testée en tant qu'adsorbant potentiel mais également en tant que support pour la formation d'hybrides organique-inorganique par le biais soit d'une silylation de sa surface (par greffage), soit par l'intercalation d'un agent tensioactif dans son espace interfoliaire.

Ces deux voies de fonctionnalisations ont été sélectionnées car elles se sont avérées permettent de maintenir les propriétés d'échange cationique de la LAP dans le cas de la silylation et dans le cas d'une intercalation partielle du tensioactif, tout en apportant des fonctions qui peuvent interagir avec des espèces cationiques présentes en solution.

Deux agents de fonctionnalisation ont été employés : l'aminopropyltriethoxysilane (APTES) pour la sylilation et le cocamidopropyl de bétaîne (CAB) pour l'intercalation (Tableau 1). La fonction aminopropyl de l'APTES est particulièrement intéressante pour former des complexes avec des cations de métaux lourds alors que le CAB présente à la fois un groupement amine quaternaire chargé positivement dans une large gamme de pHs, une charge négative, portée par le groupement carboxylate ainsi qu'une longue chaîne carbonée qui favorisent l'intercalation entre deux feuillets. Son intercalation dans la LAP apportera donc à la fois un caractère hydrophobe et la possibilité de piéger des composés cationiques via les fonctions carboxylate et les cations de compensation.

**Tableau 1 : Principales caractéristiques des deux agents de fonctionnalisation utilisés**

| Nom | N°CAS | M (g.mol⁻¹) | |
|---|---|---|---|
| | | | 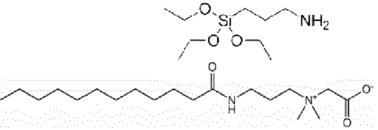 |
| 3-aminopropyltriethoxy silane (APTES) | 919-30-2 | 221.4 | |
| Cocamidopropyl de bétaïne (CAB) | 61789-40- | 342.5 | |

### 2.1) Sylilation de la LAP par greffage

La silylation de la LAP avec l'APTES a montré que selon la nature du solvant utilisé et le rapport molaire LAP/APTES, des structures différentes peuvent être obtenues montrées figure 3, le greffage pouvant se faire sur les sites de bordures (figure 3A) ou à la fois sur les sites de bordure et les sites de surface (Figure 3B). Dans le cas de la silylation des sites de bordures, deux voies d'ancrage sont possibles.

La formation de liaison de type Si-O-Si entre le greffon et la LAP en bordure ou en surface est le principal mode de liaison entre l'APTES et le support argileux (Figure 3). Mais on observe aussi des liaisons Si-O-Si entre deux greffons greffés en bordure sur des feuillets différents.

Le greffage de l'APTES rend disponible des fonctions amines, particulièrement intéressantes par leur pouvoir de complexation, tout en maintenant de fait les échanges cationiques entre Na+ et des cations d'effluent au sein de l'espace interfoliaire (Figure 3).

La préparation de la LAP greffée s'est effectuée en suivant le protocole suivant :
On mélange la LAP dans de l'éthanol absolu (pureté > 99,9%) à 30g.L-1 pendant 30 minutes sous atmosphère inerte (Ar), à une température de 60°C sous agitation magnétique à une vitesse de 200 tours.minute-1.
On ajoute 0.569 mL d'APTES par g de LAP, et on maintient l'agitation et la température pendant 24 heures.
Puis, on réalise une séparation par centrifugation à 6000 tours.minute-1 durant 5 minutes.
Le matériau solide ainsi récupéré est soumis à 6 cycles de centrifugation/rinçage (3 à l'éthanol, 3 à l'eau distillée) pour éliminer l'APTES en excès.
Le solide est séché en étuve non-ventilée à 60°C pendant 24h avant d'être broyé dans un mortier en agate.

### 2.2) intercalation de CAB dans la LAP.

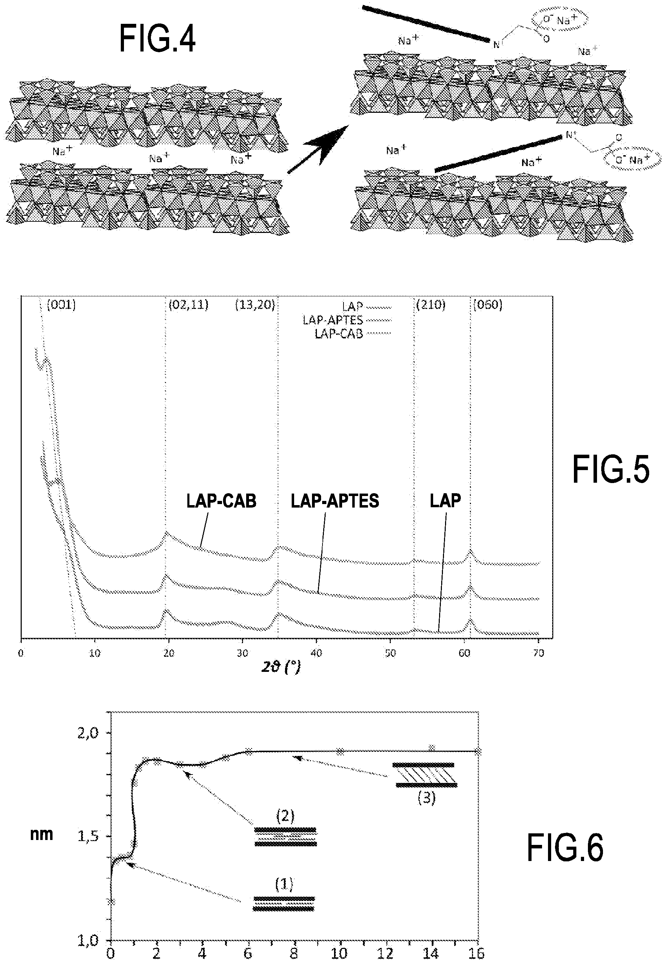

Il s'agit ici d'intercaler du CAB mais de ne pas réaliser un échange ionique complet afin de conserver des cations sodium dans l'espace interfoliaire (Figure 4).

La préparation de la LAP avec du CAB intercalé s'est effectuée selon le protocole suivant :
On mélange la LAP dans de l'eau déminéralisée acidifiée à pH=3 par ajout d'HCl, 0.1 M, la concentration de la LAP étant de 20g.L⁻¹, l'ensemble étant maintenu à 40°C sous agitation magnétique (vitesse de 200 tours.minute⁻¹ durant deux heures.
On ajoute le cocamidopropyl de bétaïne (CAB), 1.02 g.g⁻¹ de LAP (quantité correspondant à 4 fois la CEC), puis on maintien à 40°C sous agitation magnétique (vitesse de 200 tours.minute-1) pendant 24 heures.
On réalise une séparation par centrifugation à 6000 tours.minute-1 durant 5 minutes.

Le solide ainsi récupéré est soumis à 6 cycles de centrifugation/rinçage à l'eau déminéralisée pour éliminer le CAB en excès.

Le solide est séché en étuve non-ventilée à 60°C pendant 24h avant d'être broyé dans un mortier en agate.

### 3) Analyse des composés hybrides

Les diffractogrammes de Rayons X ont été réalisés sur un diffractomètre X'Pert PRO MPD équipé d'une anode en cuivre. Les échantillons ont été utilisés soit sous forme de poudre, soit sous forme de lame orientée, et analysés à l'humidité ambiante.

Les spectres de résonnance magnétique nucléaire du solide (RMN) du silicium 29 ont été enregistrés sur un spectromètre Bruker Advance II 300 MHz à température ambiante avec une sonde de 7 mm.

Les spectres infra-rouge à transformées de Fourier (FTIR) des échantillons ont été analysés sur un spectromètre Bruker, Equinox55. Les échantillons ont été analysés sous forme de mélange avec du KBr (100 mg de KBr pour 1 à 2 mg d'échantillon) pressé à 10 tonnes durant 5 minutes pour former une pastille translucide.

L'analyse par diffraction des rayons X des trois matériaux permet de déterminer si les traitements réalisés ont induits une augmentation de l'espace interfoliaire et des modifications structurales (Figure 5), par comparaison avec le diffractogramme de la LAP.

Les pics caractéristiques de la LAP sont indexés et présentés sur la Figure 5. La périodicité d001 de la LAP est de l'ordre de 14,7 Å. Les diffractogrammes de l'argile sylilée et intercalée ne montrent pas de variation de ces pics, excepté pour le premier (001). En effet, la valeur de la distance basale est respectivement de 17,2 et de 24,9 Å pour la LAP-APTES et la LAP-CAB. Cette variation de la distance basale entre les hybrides et la LAP brute semble indiquer une modification dans le matériau, induite par la mise en contact avec un agent de silylation ou un tensioactif amphotère. L'impact de la sylilation sur l'espace interfoliaire est assez modéré avec une augmentation de 2,5 Å. Ce résultat est en cohérence avec la littérature sur ce type d'hybride (+ 2.2 Å d'après He et al., (2005)). En effet, ceci s'explique par le fait que la silylation d'un minéral argileux avec de l'APTES engendre un faible gonflement car l'agent greffant interagit moins avec l'espace interfoliaire de l'argile qu'avec les sites de bordure. Ce greffage a pour conséquence de davantage cimenter les feuillets par liaisons silanols sur les sites de bordure (Negrete Herrera et al., 2005; Su et al., 2013) et donc d'avoir une meilleure organisation des feuillets, dans le de la LAP (Figure 3).

La figure 6 représente les arrangements possibles du CAB au sein de la LAP en fonction du ratio utilisé lors de la synthèse de l'hybride, avec (1) une monocouche latérale, (2) une bicouche/tricouche et (3) une structure paraffinique, adapté à partir de McLauchlin and Thomas (2008) à partir du modèle de Lagaly (1986). En ce qui concerne la LAP-CAB, le tensioactif amphotère CAB vient s'intercaler dans l'espace interfoliaire de la LAP selon un mode d'arrangement de type bicouche parallèles entre deux feuillets (Figure 6). Cette intercalation se caractérise par une augmentation importante de la distance basale de la LAP (+ 10 Å).

Si la diffraction des rayons X fournit des informations sur les changements structurels du support argileux, elle ne permet pas d'accéder à des informations significatives sur la nature des espèces organiques adsorbées sur ce dernier. La spectroscopie infra-rouge à transformée de Fourier permet donc de compléter les analyses de DRX en confirmant le confinement et/ou l'adsorption en surface des matières organiques.

Les bandes de vibrations principales de la LAP sont les bandes de vibrations des Si-O, Si-O-Si et Mg-OH, respectivement observables à des nombres d'onde de 1002, 693 et 662 cm⁻¹ (Pálková et al., 2010). Sur les spectres FTIR des composés préparés par greffage ou par intercalation figurent à la fois des bandes de vibrations caractéristiques du réseau inorganique et des bandes indiquant la présence de groupements organiques.

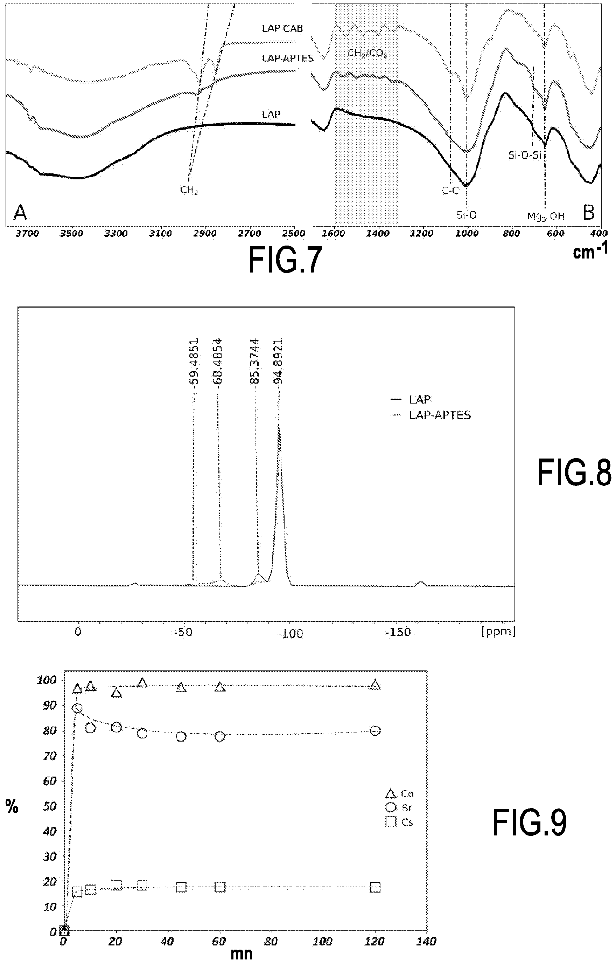

On peut notamment noter un épaulement plus marqué à 690 cm⁻¹ pour la LAP-APTES (attribuable aux liaisons Si-O-Si, Figure 7B), ainsi que des bandes d'absorbance à 2890 et 2935 cm⁻¹ (Figure 7A), principalement pour la LAP-CAB, correspondant aux bandes de vibration des groupements CH₂ symétriques et asymétriques (Thiebault et al., 2015; Wu et al., 2012). Pour des nombres d'onde de 1300 à 1600 cm⁻¹, on note la présence de bandes de vibrations typiques des hybrides, correspondant à des liaisons CH₂ (pour APTES et CAB) et à un groupement carbonyl (uniquement pour le CAB) (De Oliveira et al., 2017).

On peut observer que les bandes d'absorption, bien qu'à des nombres d'ondes équivalentes, sont systématiquement plus marquées sur la LAP-CAB que sur la LAP-APTES, c'est particulièrement visible que les bandes de vibration des liaisons C-C et des groupements CH₂.

Ces variations d'intensité ne sont pas de nature à permettre d'effectuer une comparaison entre les deux synthèses. Toutefois, la présence de bande d'adsorption typique des composés organiques permet d'affirmer que la synthèse des hybrides a été effectuée.

Le spectre RMN du ²⁹Si de la LAP (figure 8) montre deux pics principaux. Un premier à -94,9 ppm et un second à -85,4 ppm, correspondant respectivement aux Si des sites Q3 et Q2. Les sites Q2 sont des sites dans lesquels on retrouve un OH, soit (SiO₂)Si(OMg)OH, ils correspondent donc aux sites de bordures de l'argile. Les sites Q3 correspondent à des sites de type (SiO₃)Si(OMg).

Il est à noter que la silylation induit des modifications significatives de l'environnement local du silicium dans la LAP (figure 8). Les intensités des résonances correspondant aux environnements de type Q2 et Q3 varient par rapport à celle de la LAP seules et deux nouvelles résonances apparaissent avec des déplacements chimique à pics -68,5 et -59,5 ppm (Figure 8), correspondant respectivement aux sites T3 et T2. Ces observations montrent que le nombre de Si dans un environnement de type Q2 a diminué, et donc que le greffage s'est produit en partie sur les sites de bordures (des sites Q2 devenant après greffage des Q3). La présence des résonnances correspondant aux sites T2 et T3 pour la LAP-APTES indiquent que les entités greffées sont de différentes natures.

### 4) Cinétique d'adsorption

Afin d'estimer les cinétiques d'adsorption des différents éléments étudiés sur les trois adsorbants, 250 mL de solutions aqueuse contenant les sels des adsorbats sélectionnés à une concentration de 50 mg.L⁻¹ ont été mises en contact avec une masse d'adsorbant de 250 mg (soit un rapport solide/liquide de 1 g.L⁻¹). Plusieurs prélèvements ont été réalisés après 0, 5, 10, 20, 30, 45, 60, 120 et 300 minutes avant d'être immédiatement centrifugés à 6000 tours.min⁻¹ durant 5 minutes. Le surnageant a été récupéré pour analyse ultérieure par absorption atomique.
10 mL de chaque solution sont centrifugés à 6000 tours.min⁻¹ durant 5 minutes puis le surnageant est récupéré avant analyse en absorption atomique. Le reste de la solution est centrifugé à 8000 tours.min⁻¹ durant 20 minutes, le surnageant est alors jeté, l'adsorbant est récupéré, il est rincé deux fois à l'eau ultra-pure avant séchage en étuve non-ventilée à 60°C durant 48 heures.

Les différents tests de cinétique d'adsorption réalisés ont tous fourni des résultats similaires, à savoir que l'adsorption maximale est atteinte entre les deux premiers points de mesure, soit entre 0 et 5 minutes. Ceci indique une forte affinité entre l'adsorbant et les adsorbats. Par exemple, l'adsorption des trois ions sur la LAP-APTES est complétée entre 0 et 5 minutes avec des pourcentages adsorbés variables, soit 99, 80 et 18% pour le Co, le Sr et le Cs respectivement (Figure 9). Toutefois, ces résultats ont permis d'étalonner les protocoles analytiques utilisés par la suite, et notamment le temps de contact nécessaire lors des mesures.

Les isothermes d'adsorption ont été réalisées à température constante dans le laboratoire (20-24°C).La modalité principalement testée est une solution aqueuse de 100 mL concentrée en radionucléides entre 1 et 100 mg.L⁻¹ de sel, soit des concentrations molaires (solution mono-moléculaire) entre 6 µM et 0.6 mM pour le Cs, 3.7 µM et 0.37 mM pour le Sr et entre 4.2 µM et 0.42 mM pour le Co. La solution est constituée d'eau ultra-pure et concentrée à 0.1 mM de NaCl. Le pH est laissé libre puis mesuré en fin d'expérimentation, les valeurs sont comprises entre 6 et 6,8, et ces variations ne sont pas de nature à faire varier de façon significative les capacités d'adsorption ou la spéciation des composés.

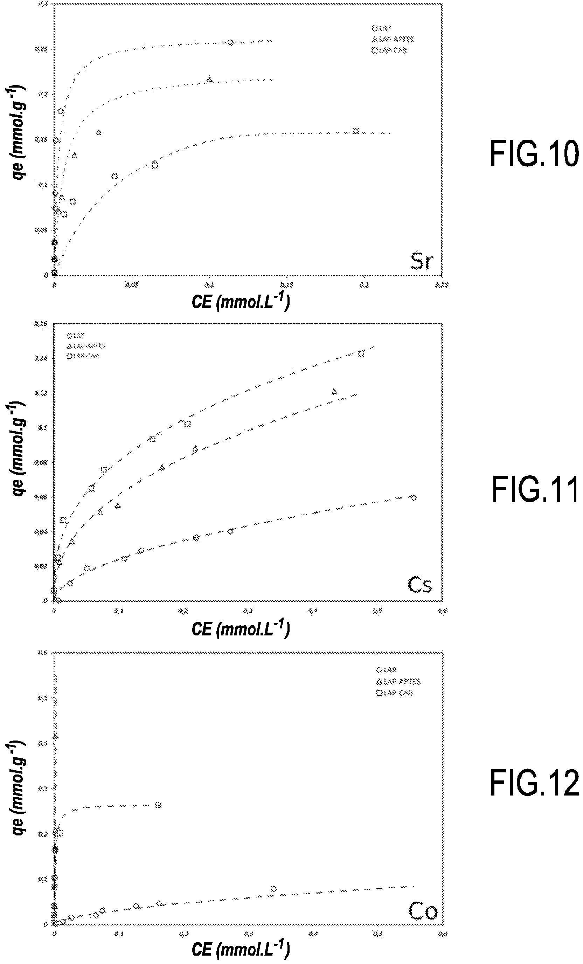

L'ajustement des isothermes d'adsorption par les équations de Langmuir, Freundlich et Dubinin-Radushkevich (D-R) conduit au calcul de nombreux paramètres thermodynamiques permettant de quantifier précisément l'affinité des adsorbats avec l'argile brute ou modifiée. La figure 11 représente les isothermes d'adsorption du Cs sur la LAP et les deux matériaux hybrides selon l'invention, les lignes pointillées représentent les résultats de modélisations obtenues avec le modèle de Langmuir. La figure 12 représente les isothermes d'adsorption du Co sur la LAP et les deux matériaux hybrides selon l'invention, les lignes pointillées représentent les modélisations obtenues avec le modèle de Langmuir (LAP-CAB uniquement) et avec le modèle de Freundlich.

L'adsorption des trois radionucléides a été réalisée en solution mono-moléculaire sur les trois adsorbants. Les interactions entre le Sr et les trois matériaux dessinent toutes trois, un isotherme de type L (Limousin et al., 2007) correspondant à une augmentation rapide de la quantité adsorbée, puis l'atteinte d'un plateau correspondant à la saturation du matériau (figure 10). Le niveau de ce plateau est différent pour les trois adsorbants sélectionnés avec une quantité maximale adsorbée croissante sur la LAP-CAB, la LAP-APTES puis la LAP respectivement. La quantité adsorbée maximale pour le Sr est donc observée sur la LAP, avec une concentration adsorbée maximale de 0.25 mmol.g⁻¹, correspondant à 67% de la CEC de ce matériau (car Sr est divalent). Toutefois, du fait du type d'isotherme observé, les trois matériaux présentent des propriétés d'adsorption tout à fait intéressantes à faibles concentrations, pour lesquelles on observe des concentrations à l'équilibre très faibles.

Pour les interactions entre le Cs et les trois adsorbants, les isothermes prédisent une relation adsorbant-adsorbat différente. En effet, on peut observer que l'augmentation de la quantité adsorbée s'accompagne d'une augmentation graduelle de la concentration à l'équilibre (Figure 11), l'un des paramètres de contrôle de l'adsorption se trouve donc être la partition solide/liquide, typique des isothermes de type Freundlich. Concernant les propriétés d'adsorption à proprement parler, la quantité maximale adsorbée est croissante sur la LAP, la LAP-APTES puis la LAP-CAB respectivement. La quantité maximale adsorbée est donc observée sur la LAP-CAB avec une capacité maximale de 0.14 mmol.g⁻¹ (20% de la CEC de la LAP) dans la gamme de concentrations testées (Figure 11).

Les interactions entre le Co et les trois adsorbants démontrent trois comportements radicalement différents (Figure 12).

L'isotherme est sub-linéaire pour l'adsorption du Co sur la LAP. Les interactions entre le Co et la LAP dépendent donc fortement de la partition solide/liquide, et la capacité d'adsorption du matériau est faible, de l'ordre de 0.07 mmol.g-1, avec des concentrations à l'équilibre très significatives. Les interactions entre le Co et la LAP-CAB montrent une augmentation graduelle de la quantité adsorbée puis un plateau de cette valeur d'adsorption, autour de 0.27 mmol.g⁻¹ (72 % de la CEC). Tandis que pour l'adsorption de Co sur la LAP- APTES, la quantité adsorbée est très significative et les concentrations à l'équilibre sont quasi-nulles, on observe en effet une parallélisation de l'isotherme avec l'axe des ordonnées (Figure 12). Les trois adsorbants présentent donc des propriétés d'adsorption contrastées par rapport aux trois radionucléides sélectionnés.

Si la LAP présente les meilleures capacités d'adsorption à la saturation pour le Sr, ses propriétés d'adsorption sont limitées pour le Cs et très limitées pour le Co en comparaison avec les deux hybrides selon l'invention. La LAP-APTES a quant à elle des propriétés intermédiaires pour le Sr et le Cs et des propriétés «exceptionnelles» pour le Co. Ceci s'explique par le maintien de l'échange cationique entre les feuillets, mécanismes prédominants pour l'adsorption du Sr (et peut-être du Cs), tandis que le fort pouvoir complexant induit par la silylation conduit à une augmentation très sensible de potentiel d'adsorption du Co. L'interaction entre le LAP-APTES et le Co est en conséquence la seule interaction pour laquelle la concentration à l'équilibre demeure quasi-nulle.

La LAP-CAB démontre également des propriétés d'adsorption très intéressantes pour le Co. En effet, malgré une saturation autour d'une quantité adsorbée de 0.27 mmol.g⁻¹, à plus faibles concentrations, l'adsorption est également très significative. Tandis que pour l'adsorption de Cs, même si l'adsorption est la plus élevée parmi les trois adsorbants, l'adsorption maximale demeure bien inférieure à la CEC, et l'adsorption du Sr est la plus faible parmi les trois matériaux utilisés, permettant de postuler que la configuration atteinte par l'intercalation de CAB dans l'espace interfoliaire ne permet pas d'optimiser/maintenir le nombre de sites chargés positivement sur l'argile, et que des recombinaisons entre le CAB lui-même sont probables (Mc Lauchlin and Thomas, 2008).

Les isothermes d'adsorption en mode compétition entre les trois cations ont été réalisées en faisant interagir simultanément les trois radionucléides dans les mêmes gammes de concentration que pour les interactions mono-moléculaires, le mélange est donc équimolaire pour les trois adsorbats.

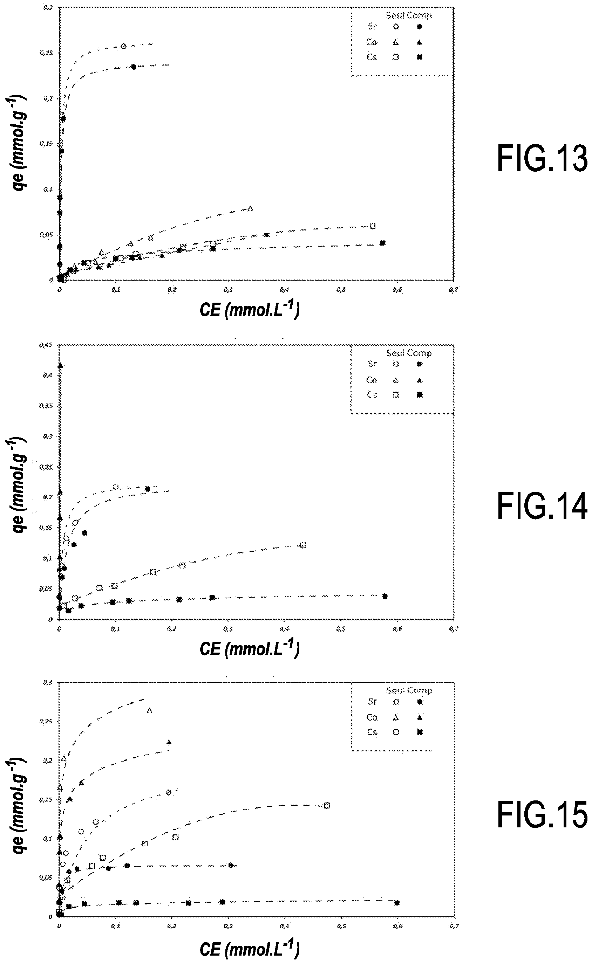

On observe une diminution systématique de la capacité d'adsorption maximale, quel que soit l'adsorbant ou l'adsorbat. Par exemple, Sr est significativement moins adsorbé à fortes concentrations sur la LAP (Figure 13) et les deux hybrides en situation de compétition (Figures 14 et 15). La seule exception est le Co sur la LAP-APTES, pour lequel on n'observe aucun effet de la compétition. Ceci provenant de sites d'adsorption différents (à savoir des sites d'adsorption sur les greffons) pour le Co sur cet hybride, la compétition est par conséquent inexistante entre le Co d'une part et le duo Cs/Sr d'autre part.

Sur les deux argiles modifiées, le Cs est l'élément le plus impacté par la compétition. Pour la même concentration initiale, l'adsorption en situation de compétition est significativement plus faible, et ce, même pour les concentrations initiales les plus faibles (élément seul ou en compétition, Figures 14 et 15). Ce résultat permet d'indiquer que le Cs n'est pas adsorbé préférentiellement sur les hybrides, notamment par rapport au Sr.

Que ce soit sur la LAP-CAB ou la LAP-APTES, l'adsorption du Co est la plus importante parmi les trois radionucléides testés, et ce, en solution mono ou multimoléculaires. Toutefois, si l'impact de la compétition est nul pour l'adsorption sur la LAP- APTES, l'impact devient significatif pour des concentrations initiales intermédiaires sur la LAP-CAB (Figure 15).

Si l'on additionne les quantités adsorbées des trois radionucléides seuls ou en compétition, cela permet de rationaliser les précédentes données et de pouvoir les observer au mieux. Pour les trois adsorbants, la concentration adsorbée cumulée des trois radionucléides est plus faible en compétition que pour les solutions mono-moléculaires (Figure 16). On peut remarquer que l'impact de la compétition est observable sur tous les adsorbants. C'est-à-dire que l'adsorption cumulée pour les solutions mono-moléculaires est systématiquement supérieure à l'adsorption en compétition (Figure 16).

Les concentrations maximales adsorbées semblent directement corrélées avec les mécanismes d'adsorption modélisés. A savoir que l'on peut décomposer l'adsorption en une composante échange cationique (systématique pour le Sr et présente sur la LAP-CAB pour le Co et le Cs) et une composante complexation de surface (pour le Co et le Cs sur la LAP et LAP-APTES). On peut observer que la composante échange cationique atteint un seuil d'adsorption quel que soit le matériau autour de 0.3 mmol.g⁻¹ pour les trois adsorbants, correspondant à 80% de la CEC théorique pour les cations divalents.

La composante complexation est notamment observable pour l'adsorption du Co sur la LAP-APTES (> 99.99 %), pour laquelle on excède largement la CEC du matériau, démontrant qu'un autre procédé entre en jeu, en l'occurrence la complexation du Co (Tableau 3).

La LAP-CAB présente les quantités adsorbées cumulées les plus importantes à faibles concentrations initiales, démontrant son affinité avec les trois adsorbats utilisés. Toutefois, à fortes concentrations initiales, l'adsorption cumulée correspond à celle de la LAP. La LAP présente deux courbes qui divergent assez peu, sauf à proximité de la saturation, et la différence de quantité adsorbée pour les ions seuls ou en compétition est dans ce cas portée principalement par le Co pour les faibles concentrations.

Les mécanismes d'adsorption que l'on peut déterminer pour chaque élément sur chacun des matériaux sont les suivants : L'adsorption du Co s'effectue par complexation sur la LAP-APTES et la LAP, et par échange cationique sur la LAP-CAB. (En ce qui concerne la complexation, différents types de sites sont particulièrement mis à contribution, les sites de bordure (oxygène non-saturés) et l'apport de groupement fonctionnels par le greffage.)

Le pH est un paramètre expérimental qui peut avoir des conséquences très significatives à la fois sur la réactivité de l'adsorbant et sur le comportement en solution de l'adsorbat (figure 17).

La LAP, comme les autres minéraux argileux, est un matériau sensible aux variations de pH qui vont modifier les charges de bordure.

En ce qui concerne les deux hybrides, à savoir LAP-APTES et LAP-CAB, les variations de pH peuvent avoir des effets contrastés. Sur la LAP-APTES, on peut considérer que l'effet de variation du pH est assez limité, tandis que la LAP-CAB peut voir sa nature chimique modifiée en cas de variation de pH.

L'effet du pH sur l'adsorption du Cs sur les trois adsorbants présente deux comportements. Tout d'abord sur la LAP brute, l'adsorption est faiblement impactée dans la gamme de pH testée, malgré une augmentation significative mais limitée pour les pH les plus basiques (Figure 17). Tandis que sur les deux hybrides, l'adsorption est nettement plus importante à pH basique (autour de 30-35%) qu'à pH acide (entre 5 et 10%).

L'effet du pH sur l'adsorption du Sr est sensiblement identique que précédemment observé sur le Cs. En effet, on observe pour les trois adsorbants une augmentation significative du pourcentage adsorbé pour les pH les plus basiques (Figure 18). L'évolution est particulièrement marquée pour la LAP-CAB, pour laquelle l'adsorption est très modérée à pH acide (entre 20 et 30%) et pour devenir quasi-totale (98%) à pH=11.8. En ce qui concerne les deux autres adsorbants, le comportement est assez similaire, même si c'est sur la LAP que l'adsorption est la plus significative aux valeurs de pH intermédiaires (i.e. 5-9).

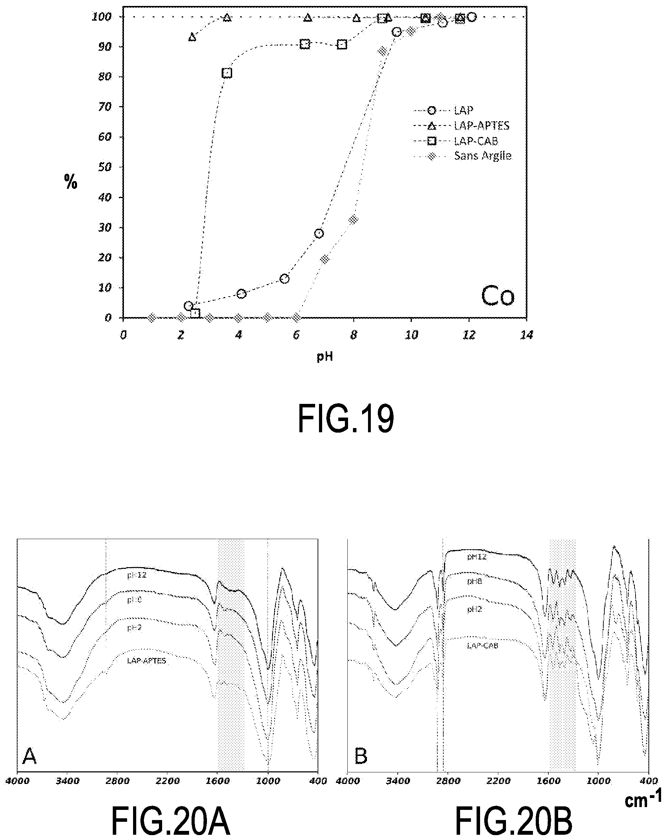

L'effet du pH sur l'adsorption du Co est plus délicat à interpréter. La spéciation de l'adsorbat est en effet très impactée par les modifications de pH. Et lorsque le pH augmente, le Co se complexe avec des anions hydroxydes et précipite. Cet effet est visible dès pH=7 et devient très significatif à pH basique (Figure 19).Pour les valeurs de pH acides, l'adsorption est très significative (95-100%) sur la LAP-APTES, tandis que l'on observe une augmentation très brutale de l'adsorption sur la LAP-CAB à pH>2, cohérente avec d'autres résultats publiés (Mahmoud et al., 2017).

On observe pour tous les adsorbants et tous les adsorbats une adsorption significativement plus importante pour des pHs basiques, autorisant à penser que les trois matériaux présentent leurs meilleures propriétés d'adsorption pour des pHs alcalins. La seule exception est l'adsorption du Co sur la LAP-APTES, très faiblement impactée par la valeur du pH. Ceci peut s'expliquer, comme nous l'avons vu précédemment, par des mécanismes interactionnels qui dépendent moins du substrat argileux que de l'apport du greffon et des conditions de complexation qu'il autorise. Or, ce dernier présente une sensibilité limitée aux variations de pH.

La stabilité des hybrides dans la gamme de pH testée peut être confirmée par spectroscopie FTIR. On peut observer que quel que soit le pH testé, les bandes d'absorption caractéristiques de la LAP-APTES (Figure 20-A) et LAP-CAB (Figure 20-B) demeurent observables. C'est notamment vrai pour la LAP-CAB et les bandes de vibrations des groupements -CH₂ (2890 et 2930 cm⁻¹) ainsi que de la zone des COO-/CH₂, au contraire de la bande de vibrations des liaisons C-C (1072 cm⁻¹), moins marquée pour les valeurs de pH les plus élevées. En ce qui concerne la LAP-APTES, on observe également une diminution des bandes d'adsorption après mise en interaction avec les éléments à toutes les valeurs de pH.

Pour l'adsorption du Co, les matériaux bruts décrits dans la littérature (comme les bentonites, montmorillonites, etc.) présentent des capacités d'adsorption faibles, entre 0.07 et 0,180 mmol.g⁻¹. Quelle que soit la gamme de concentrations utilisée, les matériaux lamellaires bruts ne permettent pas d'atteindre des capacités d'adsorption élevées à saturation. La modification des matériaux par l'ajout d'oxydes (Hashemian et al., 2015), ou de composés organiques comme le formaldéhyde (Omar et al., 2009) permet une augmentation significative de la capacité d'adsorption à la saturation, mais pas au-delà de 0,3 mmol.g⁻¹. Ceci se confirme sur les deux hybrides que nous avons testés dans ce travail, avec pour la LAP- APTES la capacité d'adsorption la plus importante, 0,419 mmol.g⁻¹ et sans saturation dans la gamme de concentrations testées, et pour la LAP-CAB, une capacité d'adsorption à saturation de 0,266 mmol.g⁻¹.

Ainsi, les deux hybrides, et surtout la LAP-APTES représentent des matériaux avec des propriétés d'adsorption du Co significativement meilleures que les autres matériaux décrits dans la littérature. Sur tous les matériaux lamellaires testés pour l'adsorption du Co dans la littérature, le mécanisme d'adsorption principale modélisé ne correspond pas à un échange cationique. En effet, on n'observe pas de forte dépendance de la magnitude de l'adsorption avec la CEC de l'adsorbant testé. Ce sont davantage des mécanismes de complexation qui peuvent être avancés, notamment pour les hybrides organiques-inorganiques.

On remarque de façon générale que quel que soit l'adsorbant testé, l'adsorption des trois éléments diffère tout en restant significative. Pour les trois adsorbants, on peut dégager des éléments s'adsorbant de façon préférentielle. Ainsi, pour la LAP, l'adsorption est décroissante pour Sr >> Co = Cs, pour la LAP-APTES, Co >> Sr > Cs, et pour la LAP-CAB, Co > Sr > Cs. L'adsorbant qui permet au global les concentrations adsorbées les plus élevés est la LAP- APTES, à l'inverse l'adsorption est la plus faible est la LAP. La LAP-CAB a donc des propriétés d'adsorption intermédiaires, mais le fait que les mécanismes d'adsorption modélisés soient systématiquement des interactions de type échange cationique présente l'avantage de conduire à des quantités adsorbées très importantes pour les concentrations initiales en adsorbat les plus faibles.

Ainsi, les deux hybrides permettent une amélioration significative des propriétés d'adsorption de la LAP brute du fait de la fonctionnalisation plus importante qui est permise.

L'impact du pH sur l'adsorption indique également dans quelle gamme de pH les trois adsorbants seraient les plus efficaces. Pour les trois adsorbants testés, on observe une amélioration significative de l'adsorption pour les valeurs de pH les plus basiques. A ces valeurs de pH, la stabilité des hybrides a également été démontrée. Il faut toutefois noter que le Co n'est plus soluble à pH basique.

On pourrait avantageusement utiliser les deux hybrides d'hybrides. En effet, les interactions entre l'APTES et le CAB d'une part, et la LAP d'autre part ne se font pas sur les même sites d'adsorption, on pourrait donc maximiser le potentiel d'adsorption de la LAP en la fonctionnalisant de façon duale.

Un résultat remarquable a été obtenu avec la LAP-APTES pour laquelle l'adsorption de l'ion Cobalt atteint des valeurs très élevées même en présence d'ions interférents. Les résultats obtenus sur Sr sont également très intéressants en termes de potentiel d'adsorption lorsqu'ils sont comparés à la littérature. Après une étude bibliographique complète, le résultat obtenu avec la LAP-APTES et Co ne trouve pas son égal dans la littérature scientifique.

### EXEMPLE 2

Des tests complémentaires ont été réalisés sur les hybrides initialement utilisés ; à savoir des tests sur la pérennité de l'adsorption, sur l'effet d'échelle, ainsi que sur la charge de surface de ces hybrides. Ces tests ont confirmé les qualités des hybrides greffés pour l'adsorption pérenne du Co et du Sr.

On a testé les conditions de synthèse des hybrides greffés en cherchant à les optimiser. Ainsi, différentes modifications ont été apportées à la synthèse, comme l'ajout de soude ou la diminution de la quantité de solvant utilisée. L'ajout de soude n'apporte pas de plus-value et sera donc abandonnée, en revanche la diminution de la quantité de solvant (par 4) n'altère pas la synthèse de l'hybride greffé, ni ses propriétés d'adsorption. Ainsi, lors de la synthèse, il est possible de produire de l'hybride greffé à un rapport solide/liquide de 120 g.L-1 de solvant.

Afin de déterminer si la LAP est le meilleur support pour le greffage, des tests d'adsorption ont été conduits sur une montmorillonite commerciale. Ces derniers n'ont pas apportés de données satisfaisantes, il apparaît que la LAP présente des propriétés particulières permettant de maximiser le taux de greffage sur ces bordures, et ce faisant, maximiser l'adsorption du Co tout en conservant des capacités d'adsorption très significatives du Sr.

Des expérimentations portant sur l'effet d'échelle et des synthèses dans des conditions différentes ont été réalisées dans le but d'estimer la faisabilité du procédé de préparation du matériau adsorbant visé ainsi que son efficacité pour l'adsorption des radionucléides dans des conditions proches de conditions industrielles.

Afin d'estimer la stabilité de l'adsorption des radionucléides sur chacun des matériaux adsorbants testés, des expérimentations de relargage ont été conduites dans différentes conditions et milieux. Des compléments d'analyse ont également été réalisés pour déterminer de la manière la plus fine possible la structure des hybrides synthétisés et de calculer les taux de greffage.

Enfin des résultats supplémentaires ont été obtenus à partir d'une montmorillonite commerciale greffée.

### A) Matériel et Méthodes.

Les parties adsorbats, adsorbants, isothermes d'adsorption et modélisation de l'adsorption, sont identiques à l'exemple 1.

Six nouvelles fonctionnalisations de la LAP par greffage ont été menées dans le but d'étudier l'influence de la quantité de solvant sur la quantité de greffons et d'optimiser les propriétés d'adsorption de l'hybride résultant. L'hybride nommé LAP-APTES dans l'exemple 1 est ci-après nommé APTES4. Cinq nouvelles synthèses ont été faites dans des conditions qui diffèrent quelque peu de celles mises en œuvre pour obtenir l'échantillon APTES4, respectivement APTES10 (i.e. augmentation de la concentration en APTES lors de la phase de greffage), APTES4 (+NaOH) (i.e. greffage en milieu basique), APTES4 (Et/2), APTES4 (Et/3) et APTES (Et/4) (i.e. augmentation du rapport solide/liquide par 2, 3 et 4 respectivement). Les données obtenues sur une LAP greffée avec de l'APTES dans du glycérol en lieu et place de l'éthanol sont également présentées afin d'estimer la possibilité d'utiliser ce solvant pour les synthèses futures du fait des contraintes de sécurité posées par l'éthanol.

Pour finir, une montmorillonite commerciale (MMT-KSF, PROLABO) a également été greffée dans des conditions similaires à la LAP-APTES4 et les résultats seront discutés ci-après.
1) Silylation de la LAP, augmentation de la quantité de greffons (APTES10). Protocole de synthèse :
   a) On mélange la LAP (Rockwood, BYK) et de l'éthanol absolu (Carlo Erba, > 99,9%) à 30 g.L⁻¹ (soit 6 g de LAP dans 200 mL d'éthanol absolu) pendant 30 minutes sous atmosphère inerte (Ar), agitation à 200 tours.minute⁻¹ par un barreau aimanté (T= 60°C) ;
   b) On ajoute sous agitation du 3-Aminopropyltriethoxysilane (APTES, Sigma-Aldrich, > 99 %), 1.422 mL.g⁻¹ de LAP, le milieu réactionnel est maintenu sous agitation à 200 tours.minute⁻¹ par un barreau aimanté pendant 24 heures à 60°C ;
   c) On sépare par centrifugation à 6000 tours.minute⁻¹ durant 5 minutes ;
   d) Le matériau ainsi récupéré est soumis à 6 cycles de centrifugation/rinçage (3 à l'éthanol, 3 à l'eau déionisée avec des volumes de rinçage autour de 100 mL) pour éliminer l'APTES en excès
   e) Le matériau est séché en étuve non-ventilée à 60°C pendant 24h avant d'être broyé dans un mortier en agate
2) Silylation de la LAP, optimisation de l'hydrolyse/condensation (APTES4( +NaOH))

Protocole de synthèse :
- on mélange LAP - éthanol absolu à 30 g.L⁻¹ (soit 6 g de LAP dans 200 mL d'éthanol absolu) pendant 30 minutes sous atmosphère inerte (Ar), agitation à 200 tours.minute⁻¹ par un barreau aimanté (T= 60°C) ;
- on ajoute en une fois de 2 mL de NaOH (Sigma-Aldrich, 33 %) à 0.1 M ;
- on ajoute sous agitation de l'APTES, 0.569 mL.g⁻¹ de LAP, le milieu réactionnel est maintenu sous agitation à 200 tours.minute⁻¹ par un barreau aimanté pendant 24 heures à 60°C ;
- on sépare par centrifugation à 6000 tours.minute⁻¹ durant 5 minutes ;
- Le matériau ainsi récupéré est soumis à 6 cycles de centrifugation/rinçage (3 à l'éthanol, 3 à l'eau déionisée) pour éliminer l'APTES en excès ;
- Le matériau est séché en étuve non-ventilée à 60°C pendant 24h avant d'être broyé dans un mortier en agate.

### 3) Silylation de la LAP, optimisation de la quantité de solvant.

Afin d'évaluer l'influence de la quantité de solvant utilisée durant la synthèse, trois LAP ont été greffées pour des rapports solide/liquide de plus en plus importants.

Protocole de synthèse :
- On mélange LAP - éthanol absolu à 60, 90 et 120 g.L⁻¹ (soit 12, 18 et 24 g de LAP pour APTES4(Et/2), APTES4(Et/3) et APTES4(Et/4) respectivement, dans 200 mL d'éthanol absolu) pendant 30 minutes sous atmosphère inerte (Ar), agitation à 200 tours.minute⁻¹ par un barreau aimanté (T= 60°C) ;
- On ajoute sous agitation de l'APTES, 0.569 mL.g⁻¹ de LAP, le milieu réactionnel est maintenu sous agitation à 200 tours.minute⁻¹ par un barreau aimanté pendant 24 heures à 60°C ;
- On sépare par centrifugation à 6000 tours.minute⁻¹ durant 5 minutes ;
- Le matériau ainsi récupéré est soumis à 6 cycles de centrifugation/rinçage (3 à l'éthanol, 3 à l'eau déionisée) pour éliminer l'APTES en excès ;
- Le matériau est séché en étuve non-ventilée à 60°C pendant 24h avant d'être broyé dans un mortier en agate.

### 4) Silylation de la LAP, modification du solvant de synthèse (APTES4(Gly))

Protocole de synthèse :
- On mélange LAP - glycérol (Sigma-Aldrich, > 99,5 %) à 30 g.L⁻¹ (soit 6 g de LAP dans 200 mL de glycérol) pendant 30 minutes sous atmosphère inerte (Ar), agitation à 200 tours.minute⁻¹ par un barreau aimanté (T= 60°C) ;
- On ajoute sous agitation de l'APTES, 0.569 mL.g⁻¹ de LAP, le milieu réactionnel est maintenu sous agitation à 200 tours.minute⁻¹ par un barreau aimanté pendant 24 heures à 60°C ;
- On sépare par centrifugation à 6000 tours.minute⁻¹ durant 5 minutes ;
- Le matériau ainsi récupéré est soumis à 6 cycles de centrifugation/rinçage (3 à l'éthanol, 3 à l'eau déionisée) pour éliminer l'APTES en excès ;
- Le matériau est séché en étuve non-ventilée à 60°C pendant 24h avant d'être broyé dans un mortier en agate.

### 5) Silylation de la MMT-KSF

Les conditions de synthèse sont présentées à nouveau ici mais sont identiques (si l'on exclut le changement d'argile) à celles de la LAP-APTES4 présentée dans la première version du rapport.

Protocole de synthèse :
- on mélange MMT-KSF (PROLABO) - éthanol absolu (pureté > 99,9 %) à 30 g.L⁻¹ (soit 6 g de MMT-KSF dans 200 mL de glycérol) pendant 30 minutes sous atmosphère inerte (Ar), agitation à 200 tours.minute⁻¹ par un barreau aimanté (T= 60°C) ;
- on ajoute sous agitation de l'APTES, 0.569 mL.g⁻¹ de MMT-KSF, le milieu réactionnel est maintenu sous agitation à 200 tours.minute⁻¹ par un barreau aimanté pendant 24 heures à 60°C ;
- on sépare par centrifugation à 6000 tours.minute⁻¹ durant 5 minutes ;
- Le matériau ainsi récupéré est soumis à 6 cycles de centrifugation/rinçage (3 à l'éthanol, 3 à l'eau déionisée) pour éliminer l'APTES en excès ;
- Le matériau est séché en étuve non-ventilée à 60°C pendant 24h avant d'être broyé dans un mortier en agate.

6) Afin de caractériser l'impact de la modification du volume global sur la capacité d'adsorption des différents adsorbants, trois volumes de solution ont été étudiés lors de tests d'adsorption, 50, 100 et 250 mL, en présence de 50, 100 et 250 mg d'adsorbants afin de maintenir le rapport solide/liquide à 1g.L⁻¹. Les tests d'adsorption ont été effectués à une concentration de 100 mg.L⁻¹ de sel pour chaque adsorbat, soit une concentration molaire de 0.42, 0.37 et 0.60 mM pour le Co, le Sr et le Cs respectivement. Les tests d'adsorption ont été effectués dans une solution d'eau déionisée portée à 0.1 mM de NaCl (Carlo Erba, > 99,5 %).

Deux modalités ont été testées :
- une adsorption pour les adsorbats seuls (pour Sr et Co seulement), et
- une adsorption en présence des 3 adsorbats (effet de compétition).

7) Des expériences de relargages ont été réalisées dans le but de caractériser la pérennité de l'adsorption. Ces expérimentations ont été réalisées en faisant interagir une masse de 20 mg d'adsorbant, récupérée après adsorption de Sr et Co seuls et de Sr, Co et Cs en mélange (compétition), avec 20 mL de solution (soit un rapport solide/liquide de 1 g.L⁻¹) durant une semaine sous agitation mécanique. 5 types de solutions ont été testés :
- de l'eau déminéralisée,
- des solutions salines à deux forces ioniques et en présence de cations interférents mono ou divalents. Quatre solution ont ainsi été étudiées, 0.2 et 2 mM de NaCl (Carlo Erba, > 99,5 %) et 0.1 et 1 mM de CaCl₂ (VWR, > 97%). L'objectif est de pouvoir comparer l'impact d'un cation monovalent (i.e. Na⁺) et divalent (i.e. Ca²⁺) dans des conditions de nombre de charges cationiques identique (expliquant la concentration moitié moindre utilisée pour le CaCl₂), et
- des solutions acides (testées uniquement sur le Co seul et pour l'APTES4 et 10) avec présence ou absence de cations interférents. Quatre solutions ont ainsi été étudiées, 0,2 et 2 mM HCl (Carlo Erba, 37 %), et 0,2 et 2 mM HCl avec 2 mM NaCl.

### B) Résultats

Les différents matériaux seront présentés en trois sous-groupes dans la partie résultats. Tout d'abord, un groupe comportant les matériaux initiaux (i.e. LAP, APTES4) ainsi que deux pour lesquels des modifications ont été testées lors de la synthèse (APTES10 et APTES4(+NaOH)), puis un groupe qui contient les 4 hybrides greffés dans des rapports solide/liquide variables (i.e. APTES4, APTES4(Et/2, APTES4(Et/3) et APTES4(Et/4)), et, pour terminer, juste avant les discussions et perspectives, les résultats préliminaires obtenus sur les MMTs seront présentés.

### 1) Analyse des hybrides greffés.

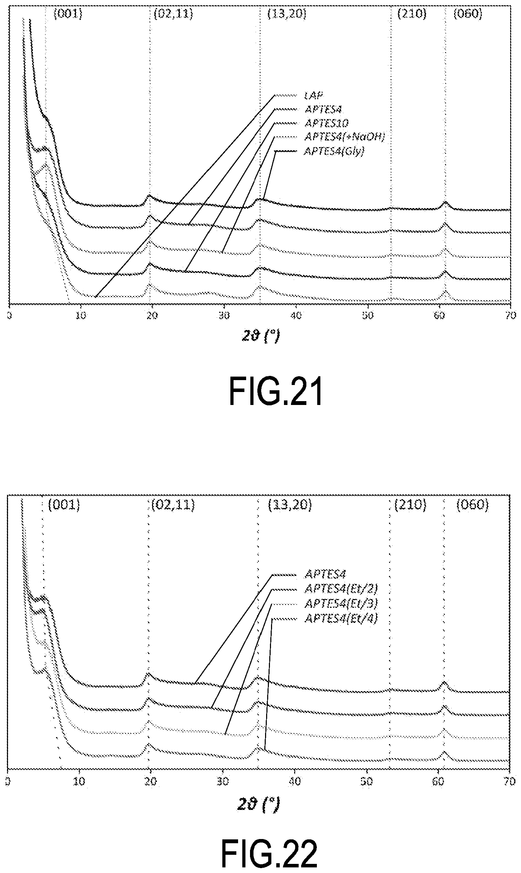

L'analyse par diffraction des rayons X des hybrides greffés ne permet pas de discriminer des modifications de structures entre les différents échantillons. En effet, la distance basale calculée à partir de la réflexion associée au plan (001) ne présente pas de variation très significative quel que soit l'hybride observé (Figure 21).

En comparaison avec la LAP, tous les matériaux présentent une augmentation de la distance basale (14.7 pour la LAP à 17.2 Å pour l'ensemble des hybrides greffés), indiquant que le greffage s'est produit dans tous les cas de figure.

L'impact du rapport solide/liquide utilisé lors de la synthèse est peu visible en DRX. En effet, les diffractogrammes sont similaires (distance basale identique) pour les 4 modalités testées (Figure 22). De même, les variations d'intensité de pic demeurent faibles et on ne peut discriminer de façon claire les 4 hybrides sur la base de ces résultats.

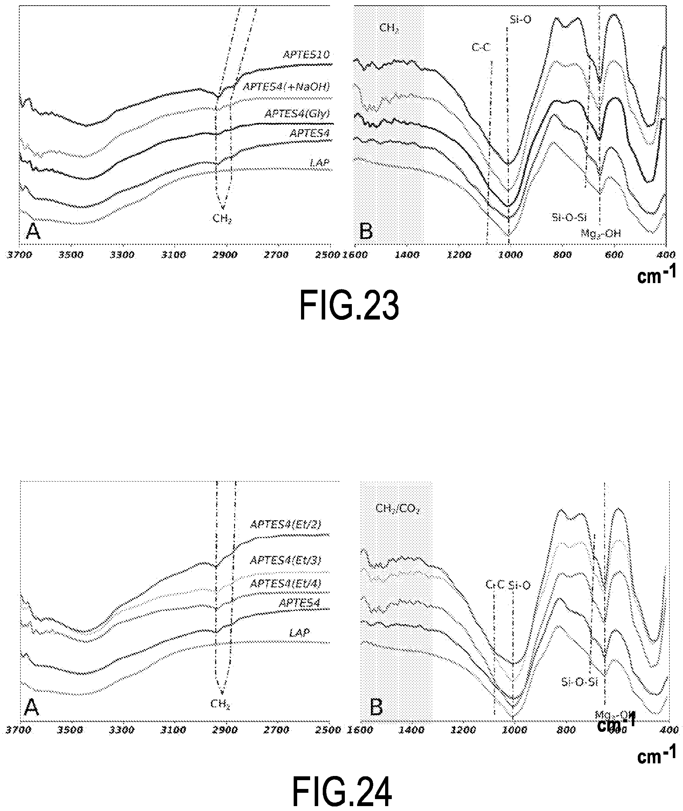

L'analyse en spectroscopie infra-rouge à transformées de Fourier (IRTF) permet de confirmer ces premiers résultats en DRX (Figure 23). Les bandes de vibrations principales de la LAP ont déjà été décrites dans la première version du rapport. Pour rappel, les bandes de vibrations des Si-O, Si-O-Si et Mg-OH (Figure 23B), sont respectivement observables à des nombres d'onde de 1002, 693 et 662 cm⁻¹ (Pálková et al., 2010).

Sur les spectres IRTF des matériaux préparés par greffage figurent à la fois des bandes de vibrations caractéristiques du réseau inorganique et des bandes indiquant la présence de groupements organiques. On peut notamment noter un épaulement plus marqué à 690 cm⁻¹ pour les hybrides greffés (attribuable aux liaisons Si-O-Si, Figure 24B), ainsi que des bandes d'absorbance à 2890 et 2935 cm⁻¹ (Figure 24A), correspondant aux bandes de vibration des groupements CH2 symétriques et asymétriques (Thiebault et al., 2015; Wu et al., 2012). Pour des nombres d'onde de 1300 à 1600 cm⁻¹, on note la présence de bandes de vibrations typiques des hybrides, correspondant à des liaisons -CH₂ (pour APTES) (De Oliveira et al., 2017).

On remarque que sur tous les hybrides greffés, ces bandes d'absorption sont nettement plus marquées que sur la LAP. Toutefois, l'analyse par spectroscopie infra-rouge n'étant pas quantitative, il est délicat de réaliser des comparaisons entre les différents hybrides greffés. On peut noter que la synthèse semble avoir été réalisée avec succès pour tous les hybrides greffés, quelles que soient les conditions de synthèse (Figure 23) comme par exemple le remplacement de l'éthanol par du glycérol. De la même façon, la variation du rapport solide/liquide lors de la synthèse ne semble pas impacter le greffage. Les bandes d'adsorption typiques des hybrides greffés sont bien visibles quel que soit le rapport solide/liquide utilisé lors de la synthèse (Figure 24).

### 2) Taux de greffage/intercalation

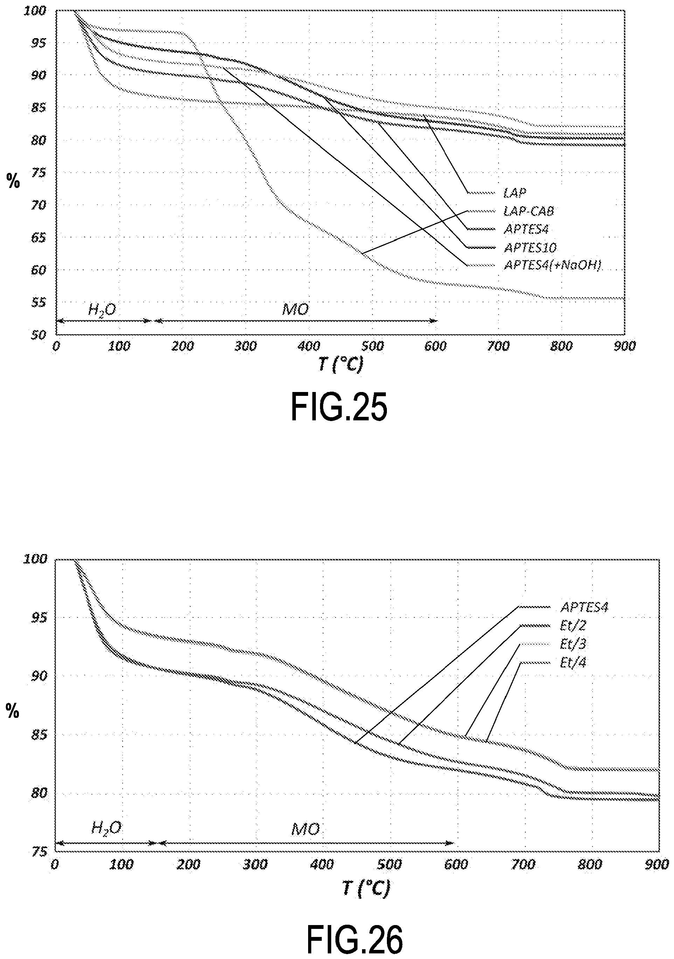

Afin de caractériser l'hybride résultant de chacune des synthèses, l'ATG-DTG, technique dans laquelle le matériau est soumis à un traitement thermique sous atmosphère oxydante (air), permet d'observer les pertes en masse induites lors de l'augmentation progressive de la température (2°C par minute de 30 à 900°C en l'occurrence). Deux pertes en masse bien distinctes sont observées sur les thermogrammes :
- la première se produit dans une gamme de températures allant de 30 à 150°C, qui correspond à la perte en eau du matériau (vaporisation progressive des molécules d'eau adorbées) ;
- la seconde entre 150 et 600 °C correspondant majoritairement à la perte en matière organique (MO) du matériau (Figure 25). L'observation des différents thermogrammes obtenus pour les cinq matériaux testés permet tout d'abord de relever que la perte en eau est variable en fonction du matériau choisi. Celle-ci est en effet maximale pour la LAP (13,7 %) et minimale pour la LAP-CAB (3,5 %), tandis que pour les deux hybrides greffés, l'augmentation de la quantité de greffons conduit à une diminution de la teneur en eau du matériau résultant, soit 9,3 et 7,0 % pour l'APTES4 et l'APTES10 respectivement (Tableau 2). La teneur en MO est également sujette à ce type de variation, mais de façon inverse à la teneur en eau. En effet, la teneur en MO est la plus importante pour la LAP-CAB puis pour l'APTES10 et enfin pour l'APTES4 avec des teneurs théoriques respectives de 35.5, 8.2 et 5.5 % (Tableau 2).

Il faut effectivement considérer qu'une partie (faible) de la MO (plus particulièrement du carbone) peut rester occluse dans la structure minérale résiduelle suite à un traitement thermique sous air.

Les thermogrammes obtenus pour les hybrides greffés à rapport solide/liquide variables présentent d'importantes similarités (Figure 26). Seule la perte en eau varie de façon significative entre d'une part APTES4 et APTES4(Et/2) et d'autre part APTES4(Et/3) et APTES4(Et/4). Chacun de ces deux groupes d'échantillons ayant été analysé lors de jour différents, il est envisageable que la valeur de perte en eau corresponde davantage à un taux d'humidité ponctuel. Ainsi, la diminution de la teneur en eau n'est pas corrélée au taux de greffage tel que cela était le cas sur la Figure 5.

**Tableau 2 : Données calculées à partir des courbes thermogravimétriques présentées Figures 25 et 2 6 :**

| **Matériau** | **Teneur H₂O >150°C** | **Teneur MO 150-600°C** | **Taux de greffage ou Taux de greffage ou Intercalation mmol.g⁻¹** | **Rendement** |
|---|---|---|---|---|
| LAP | 13,7 % | - | - | |
| LAP-CAB | 3,5 % | 35.5 % | 1.08 | 1.44 CEC |
| APTES4 | 9,3 % | 5.5 % | 0.37 | 1.02 CE_{Bordures} |
| APTES10 | 7,0 % | 8.2 % | 0.54 | 1.49 CE_{Bordures} |
| APTES4(+NaOH) | 7,2 % | 3.9 % | 0.26 | 0.72 CE_{Bordures} |
| APTES4(Et/2) | 9,2 % | 4.9 % | 0.32 | 0.90 CE_{Bordures} |
| APTES4(Et/3) | 6,6 % | 5.2 % | 0.34 | 0.96 CE_{Bordures} |
| APTES4(Et/4) | 6,5 % | 5.4 % | 0.36 | 0.99 CE_{Bordures} |

A partir de la masse molaire de matière organique utilisée, on peut estimer le taux de greffage (ou taux d'intercalation pour la LAP-CAB) et le rationnaliser par rapport aux sites de greffage/intercalation disponibles. On considère que les sites disponibles pour l'intercalation du CAB sont équivalents à la CEC du matériau (car l'adsorption de CAB est réalisée par échange cationique), tandis que pour le greffage, ces sites disponibles correspondent à la CE (capacité d'échange) des sites de bordures du matériau, comme défini par Negrete Herrera et al. (2005). Le greffage sur des sites de surface n'est pas pris en compte dans ce calcul, et peut donc amener à une surestimation du taux de greffage sur les sites de bordures.

Le rendement de 1 signifie ici qu'on a réalisé des greffages ou intercalations en utilisant sur tous les sites de bordures des couches T pour le greffage et toutes les charges négatives des couches O pour l'intercalation. Et un rendement supérieur à 1 signifie qu'on a utilisé en outre des sites de surfaces et des liaisons entre greffons pour le greffage et des liaisons entre agents intercalants pour l'intercalation.

Ainsi, le rendement de l'intercalation est de 1,44 CEC, c'est-à-dire que la LAP-CAB présente une quantité « excédentaire » de tensioactif intercalé par rapport au nombre de sites disponibles. Ceci peut s'expliquer par la présence d'autres types d'interactions entre le tensioactif et la matrice minérale, voire entre les molécules de tensioactif. Ainsi, la présence d'interactions de type Van der Waals (liaisons de faibles énergie) entre le tensioactif et l'argile (ou entre deux molécules de tensioactif) est probablement à l'origine de cet excès. Ceci permet d'expliquer notamment le phénomène de relargage d'matière organique observé de façon plus marquée sur la LAP-CAB (voir ci-après).

La synthèse de l'argile greffée avec 2.5 fois plus d'APTES (i.e. APTES10) ne conduit pas à une augmentation du même ordre de grandeur de la teneur en MO et par conséquent du taux de greffage de la LAP. En effet, la masse de greffons augmente sur l'APTES10 par rapport à l'APTES4 mais dans une moindre mesure (+ 2,7 % en masse). Toutefois, cette faible augmentation d'un point de vue massique est tout à fait significative du point de vue du rendement du taux de greffage en comparaison au nombre de sites disponibles, avec une augmentation de 1,02 à 1,49 pour l'APTES4 et 10 respectivement (Tableau 1). Ce résultat peut s'expliquer de trois façons différentes en ce qui concerne les modifications intervenant lors de la synthèse de l'APTES10. Soit une intercalation de certains greffons au sein de l'espace interfoliaire (peu probable au vue de la DRX mais possible), soit une meilleure hydrolyse-condensation conduisant au fait que chaque molécule d'APTES soit greffée sur un site de bordure et non deux (cf. Figure 3), soit une augmentation du greffage en surface, voir ci-après.

Les modifications de milieu ou de concentrations des réactifs lors de la synthèse affectent également le taux de greffage. L'APTES4(+NaOH) présente un taux de MO plus faible qu'en l'absence de NaOH (3.9 contre 4.9 % respectivement), correspondant à un rendement de 0.72. La masse globale de MO greffée est donc moins importante pour cet hybride en comparaison à l'APTES4. Toutefois, il faut relativiser cette masse globale de greffons par la quantité de greffons. En effet, les caractérisations faites en RMN tendent à démontrer des changements de conformations des greffons pour ces deux synthèses par rapport à l'APTES4, ce qui est déterminant dans le calcul de la quantité de greffons.

L'impact du rapport solide/liquide sur le taux de MO est très modeste et ne permet pas de dégager tendance particulière. En effet, le taux de MO est compris entre 4.9 à 5.5 % pour ces quatre hybrides pour un rendement entre 0.9 et 1,02, variation peu significative (Tableau 2). On peut donc affirmer que le greffage (en quantitatif) demeure identique pour des rapports solide/liquide variables allant de 1 à 4 en terme de ratios.

### 3) Analyse des matières organiques confinées

La spectroscopie de résonance magnétique nucléaire du solide (RMN) permet de mieux caractériser la conformation des agents greffés/intercalés au sein des hybrides. Afin d'observer le plus exhaustivement possible ces conformations, deux types d'analyses RMN ont été réalisées :
- La RMN du ²⁹Si (non-réalisée sur la LAP-CAB, Rotation à 4kHz, Rotor 7 mm), et
- La RMN du ¹H (Rotation 30 kHz, Rotor 2,5 mm).

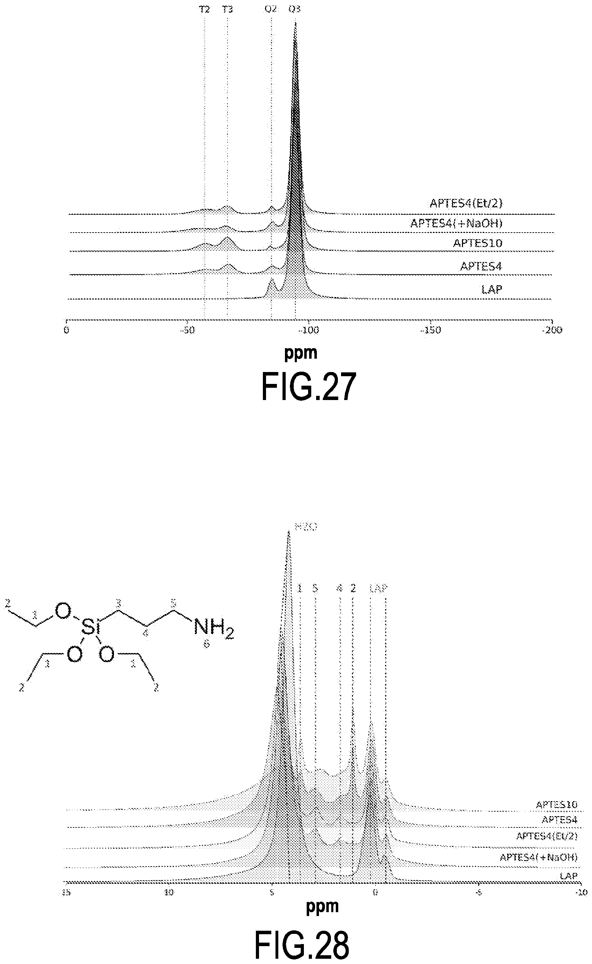

Le spectre RMN du ²⁹Si de la LAP montre deux résonances principales (Figure 27). Une première correspondant à un déplacement chimique de -94,9 ppm et une seconde à -85,4 ppm, correspondant respectivement aux Si des sites Q3 et Q2. Les sites Q2 sont des sites dans lesquels on retrouve un OH, soit (SiO₂)Si(OMg)OH, ils correspondent donc aux sites de bordures de l'argile. Les sites Q3 correspondent à des sites de type (SiO₃)Si(OMg) (Delevoye et al., 2003; Kubies et al., 2002).

Le greffage de l'APTES modifie le spectre RMN du ²⁹Si du matériau. En effet, on observe que l'intensité des pics correspondant aux pics Q2 et Q3 varie, et que cette variation est associée à l'apparition de deux nouvelles résonances à des valeurs de -68,5 et -59,5 ppm (Figure 27), correspondant respectivement aux sites T3 et T2 (un site T corresponde à un environnement du Si de type Si(R)(OM)ₙ(OH)₃₋ₙ, avec M étant Si ou Mg et n variant de 1 à 3). La présence de ces résonances pour les hybrides greffés indique que le greffage a également pu se produire en surface du matériau. Les rapports entre ces différents pics permettent également de dégager des tendances sur les matériaux résultant.

Ainsi, si l'on compare l'APTES4 et 10, on peut observer que le rapport Q3/Q2 est plus élevé pour l'APTES10, indiquant une meilleure efficacité de greffage sur les sites de bordure (Tableau 3). En effet, la diminution de l'intensité du pic correspondant aux sites Q2 démontre un plus faible nombre de sites « insaturés » à la surface du matériau suite au greffage de l'APTES. Toutefois, l'APTES10 présente également des pics T2 et T3 plus intenses que l'APTES4 (Tableau 3), montrant que si le greffage des sites de bordure est plus important, le greffage de sites de surface l'est également, ce qui permet de relativiser l'augmentation du taux de greffage calculé dans la partie précédente.

**Tableau 3 : Informations quantitatives issues du traitement des spectres RMN du ²⁹Si de la LAP et des hybrides greffés, le rapport Q3/Q2 correspond à au rapport des intensités des pics Q3 et Q2, ΣT correspond à la somme des pourcentages relatifs des pics T2 et T3, et ΣQ/ ΣT correspond au rapport de la somme des intensités des pics Q et T respectivement.**

| **Matériau** | **Q₃/Q₂** | **ΣT** | **ΣQ/ ΣT** |
|---|---|---|---|
| LAP | 18.9 | - | - |
| APTES4 | 20.9 | 14.6 | 5.8 |
| APTES10 | 51.2 | 16.2 | 5.2 |
| APTES4(+NaOH) | 19.9 | 11.2 | 7.9 |
| APTES4(+Et/2) | 29.3 | 11.9 | 7.3 |

Les deux autres hybrides greffés (soit APTES4(+NaOH) et APTES4(Et/2)) présentent des intensités relatives proches de l'APTES4, avec toutefois quelques changements. L'APTES4(+NaOH) présente une quantité de sites T relativement plus faible que l'APTES4 original, alors que son rapport Q3/Q2 demeure sensiblement identique (Tableau 3).

Ainsi, le greffage avec ajout de soude conduit à un taux de greffage similaire des sites de bordure, mais à un greffage plus faible des sites de surface. L'APTES4(Et/2) présente une quantité de sites T similaire à celle de l'APTES4(+NaOH), tandis que le rapport Q3/Q2 est plus élevé sur ce premier. Ainsi, l'ajout de soude lors de la synthèse ou la diminution de la quantité de solvant semble impacter la synthèse à la fois dans la nature des sites de réaction (Q et/ou T) ainsi que dans son rendement.

La RMN du ¹H permet de confirmer ces premières observations (Figure 28). Sur le spectre de la LAP, deux types de résonances sont présents (Alba et al., 2000). Une résonance correspondant à l'eau autour d'une valeur de déplacement chimique de 4.2 ppm, et deux résonances correspondant aux protons portés par les groupements OH de structures, respectivement à des déplacements chimiques de 0.3 et -0.5 ppm.

Les hybrides présentent également ces pics de la LAP, et on peut observer que des résonances supplémentaires apparaissent. Ces dernières correspondent à différents types de protons présents dans la structure de l'APTES. Exception fait de l'amine (non-observable) et des protons notés '3' sur la Figure 28, on peut remarquer la présence des résonances indexées '1', '2', '4' et '5' et correspondant chacun à des protons spécifiques du groupement aminopropyl.

Les intensités relatives des résonances sont variables en fonction de l'hybride synthétisé. Par exemple, celle correspondant à la présence d'H2O est beaucoup plus intense sur l'APTES4 que sur l'APTES10, confirmant les résultats de l'analyse thermogravimétrique. De plus, deux résonances (soit '1' et '2') correspondant aux protons des chaînes éthoxy, sont beaucoup moins intenses pour l'APTES(Et/2) et l'APTES(+NaOH) par rapport à l'APTES10 et 4. Or, la diminution de l'intensité des résonances de ce type de proton indique un meilleur taux d'hydrolyse/condensation. Ainsi, comme observé précédemment en RMN du ²⁹Si, l'ajout de soude et l'augmentation du rapport solide/liquide de synthèse semblent être des facteurs favorables pour l'amélioration de l'efficacité de la réaction d'hydrolyse/condensation (observables également pour l'APTES4(Et/3) et APTES4(Et/4)).

En effet, ces résonances (i.e. '1' et '2') étant moins intenses voire totalement absentes dans ces deux cas, cela signifie que la quasi-totalité des groupements éthoxy ont été hydrolysés lors de la synthèse.

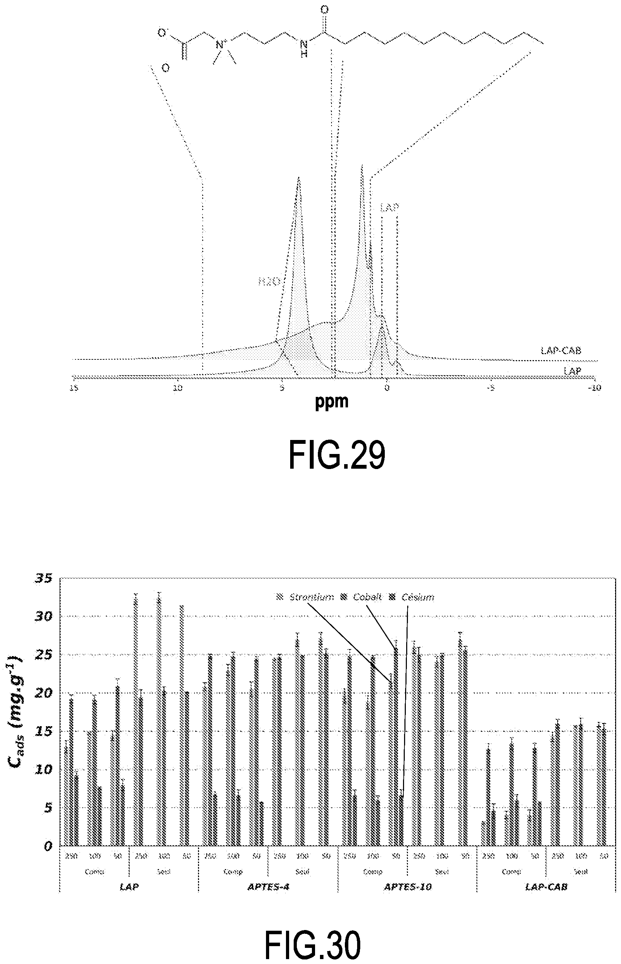

Le spectre de RMN du 1H de la LAP-CAB est présenté Figure 29. On peut remarquer que les pics de la LAP sont également présents, même si la résonance attribuée à la présence de l'eau est très peu visible. Ceci est certainement causé à la fois par la faible teneur en eau de ce matériau ainsi que du grand nombre de pics présents, imputables à la grande variété de protons présents au sein de CAB et difficilement résolus par cette technique. Toutefois, on retrouve à la fois des pics caractéristiques de la tête polaire du CAB et de la chaîne apolaire, ce qui indique que la structure chimique du composé n'est pas affectée lors du confinement dans l'espace interfoliaire.

### 4) Effet d'échelle sur les propriétés d'adsorption

Afin d'estimer le potentiel des adsorbants pour l'adsorption des radionucléides sélectionnés à plus grande échelle, il est nécessaire d'estimer l'impact d'une augmentation du volume. Pour les trois volumes utilisés, 50, 100 et 250 mL, la seule modification apportée est la variation du volume, ainsi le rapport solide/liquide demeure constant à 1 g.L⁻¹. Les résultats obtenus lors des différents tests d'adsorption sont présentés Figure 30.

Pour chacun des trois radionucléides testés, on observe des tendances similaires pour les capacités d'adsorption des différents matériaux utilisés (Figure 30). Par exemple, pour le Sr la capacité d'adsorption est systématiquement plus élevée pour la modalité seule par rapport à la modalité en compétition et ce quel que soit l'adsorbant ou le volume utilisé. Pour le Co, ces variations sont moins significatives.

L'impact de l'augmentation du volume global de la solution ne semble pas avoir d'effet significatif sur la capacité d'adsorption des différents matériaux dans la gamme de volume utilisée. En effet, aucune tendance nette ne se dessine. Il semble donc que les adsorbants conservent leur efficacité d'adsorption malgré une augmentation globale du volume d'interaction.

### 5) Propriétés d'adsorption des nouveaux hybrides greffés.

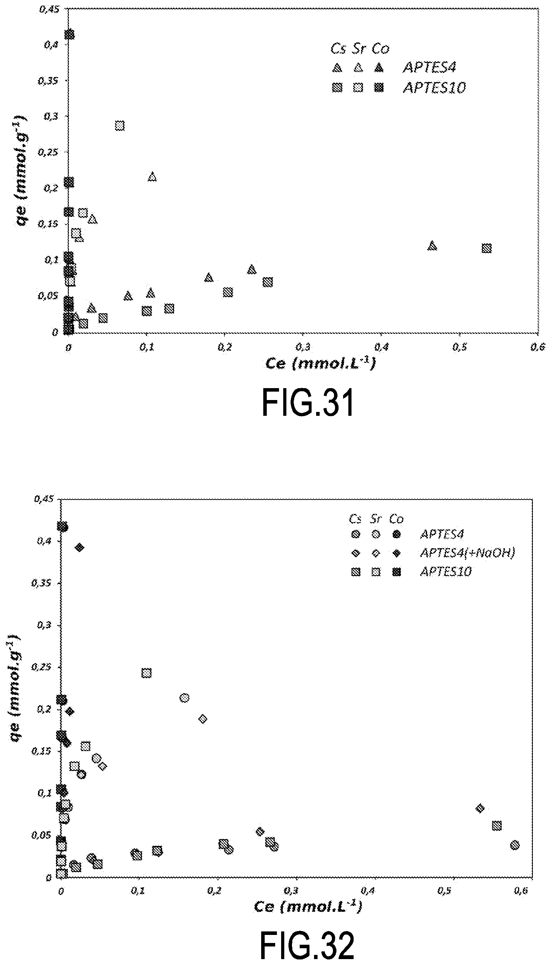

Afin de tester l'impact de l'augmentation de la quantité d'agents greffés sur les propriétés d'adsorption, des essais ont été menés dans un premier temps avec les radionucléides pris séparément (Figure 31). On remarque que les capacités d'adsorption ne sont pas modifiées de manière très significative par l'augmentation de la quantité d'APTES greffé. En effet, l'adsorption du Co et du Cs demeurent très proches sur l'APTES4 et 10 (Figure 14). Toutefois, la capacité d'adsorption du Sr est significativement supérieure sur l'APTES10 en comparaison avec l'APTES4 (qₘₐₓ = 0.28 et 0.22 mmol.g⁻¹ respectivement, Figure 31).

En ce qui concerne le Cs, comme cela a déjà été mentionné dans le rapport précédent, le mécanisme d'adsorption est différent de celui du Co et du Sr (complexation de surface majoritaire), le taux de greffage n'a que peu, voire pas d'influence sur sa capacité d'adsorption.

Afin de tester les propriétés d'adsorption des nouveaux hybrides greffés (APTES10, APTES4(+NaOH), APTES4(Et/2), APTES4(Et/3) et APTES4(Et/4)), des tests d'adsorption ont été réalisés dans les mêmes conditions que celles utilisées dans le premier rapport. Les résultats sont présentés Figure 32.

La Figure 32 permet de comparer la capacité d'adsorption des radionucléides en compétition sur trois hybrides greffés. Pour le Co, l'adsorption est très significative (>99,9 %) pour les concentrations initiales les plus faibles quel que soit l'adsorbant utilisé. La seule variation entre les trois hybrides se produit pour la concentration initiale la plus élevée avec une concentration à l'équilibre en solution significative pour l'APTES4(+NaOH). La seule différence dans l'adsorption du Co pour les trois hybrides greffés est donc la capacité d'adsorption qui semble plus limitée sur l'APTES4(+NaOH), toutefois, cette capacité demeure très importante et l'adsorption quasi-totale pour les concentrations les plus faibles montre que chacun des trois hybrides greffés adsorbe le Co de manière très significative. L'adsorption du Cs sur les trois hybrides greffés ne présente pas de variation très importante des capacités d'adsorption. On peut toutefois noter que la capacité d'adsorption maximale de chaque adsorbant suit une tendance croissante, telle que APTES4 < APTES10 < APTES4(+NaOH) (Figure 32).

Des variations plus significatives sont observées pour l'adsorption du Sr. On remarque que comme pour les solutions mono-moléculaires, l'APTES10 présente la meilleure capacité d'adsorption à saturation du Sr (i.e. 0.245 mmol.g⁻¹) pour la concentration initiale en solution la plus élevée (i.e. 0.37 mM). Toutefois, cette capacité d'adsorption demeure inférieure à la CEC théorique. Mais il faut relativiser cet écart du fait des concentrations utilisées qui sont assez faibles, la saturation n'étant pas encore atteinte au regard de la forme de l'isotherme d'adsorption, ainsi que par le fait que ces isothermes ont été réalisées en compétition. L'APTES4(+NaOH) présente la capacité d'adsorption la plus faible (0.195 mmol.g⁻¹) tandis que l'APTES4 présente une capacité d'adsorption intermédiaire.

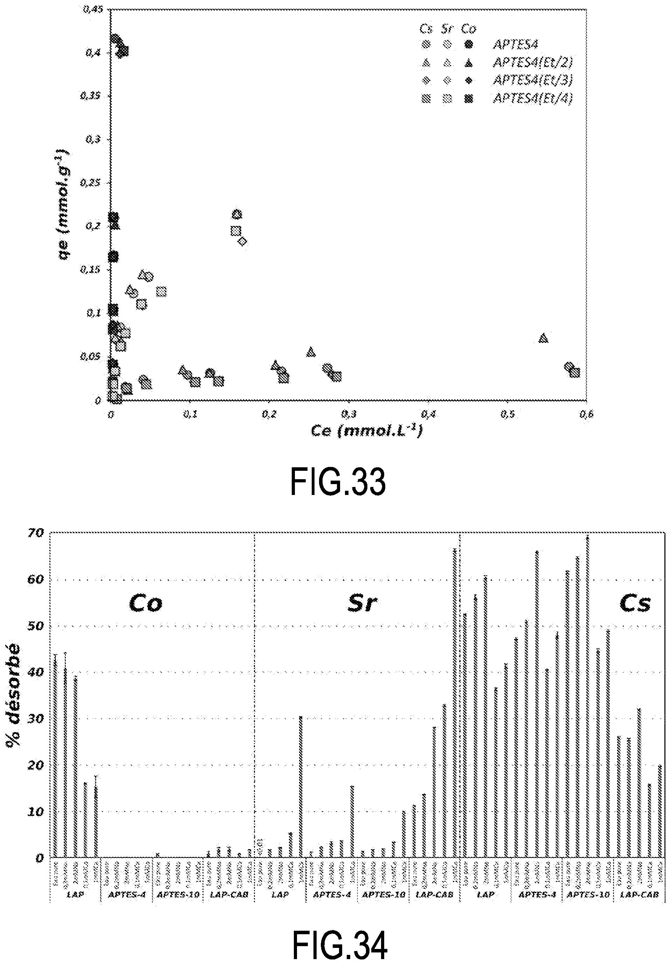

La LAP la plus greffée (APTES10) n'est a priori pas plus favorable aux échanges cationiques que les autres. Si l'on analyse de manière plus spécifique l'impact du rapport solide/liquide lors du greffage sur l'adsorption des radionucléides en compétition, on s'aperçoit que les variations sont très peu significatives (Figure 33). En effet, pour les 4 rapports solide/liquide testés, les capacités d'adsorption ne varient que très faiblement.

### 6) Relargage/ Réversibilité de l'adsorption en solution saline.

Dans le cadre de ces expérimentations de relargage, quatre adsorbants ont été testés, LAP, APTES4, APTES10 et la LAP-CAB. Pour les tests de relargage effectués avec des adsorbants ayant préalablement adsorbés les trois radionucléides en compétition, les tendances suivantes se dégagent (Figure 34) :
Le Cs se désorbe de manière significative quel que soit le matériau ou le type de salinité testée. Le Sr est faiblement désorbé en présence d'eau pure et de NaCl, mais la désorption est significative pour les solutions contenant du CaCl₂ quel que soit le matériau. Le Co se désorbe significativement de la LAP, mais faiblement de la LAP-CAB, et très faiblement des deux argiles greffées.

De manière plus spécifique, pour le Sr, le relargage dans l'eau pure est quasi nul pour la LAP et les hybrides greffés. L'augmentation de la concentration en sel augmente de manière significative le relargage de cet élément. Toutefois, à quantité de charge cationique équivalente, le relargage de Sr est supérieur en présence d'ions Ca²⁺ en comparaison aux ions Na⁺. Pour le Cs, c'est la situation opposée qui est observée. Ces deux résultats peuvent s'expliquer par des échanges cationiques favorisés par la présence de cations de même charge. Ainsi le divalent Ca²⁺ permet un relargage plus important du Sr (i.e. divalent), et le monovalent Na du Cs (i.e. monovalent). Quant au Co, la présence d'ions Na⁺ en solution conduit à un relargage supérieur à celui observé en présence d'ions Ca²⁺ pour la LAP. Pour les LAP greffées, le relargage est nul en milieu salin et il reste très limité pour la LAP-CAB dans ces mêmes conditions.

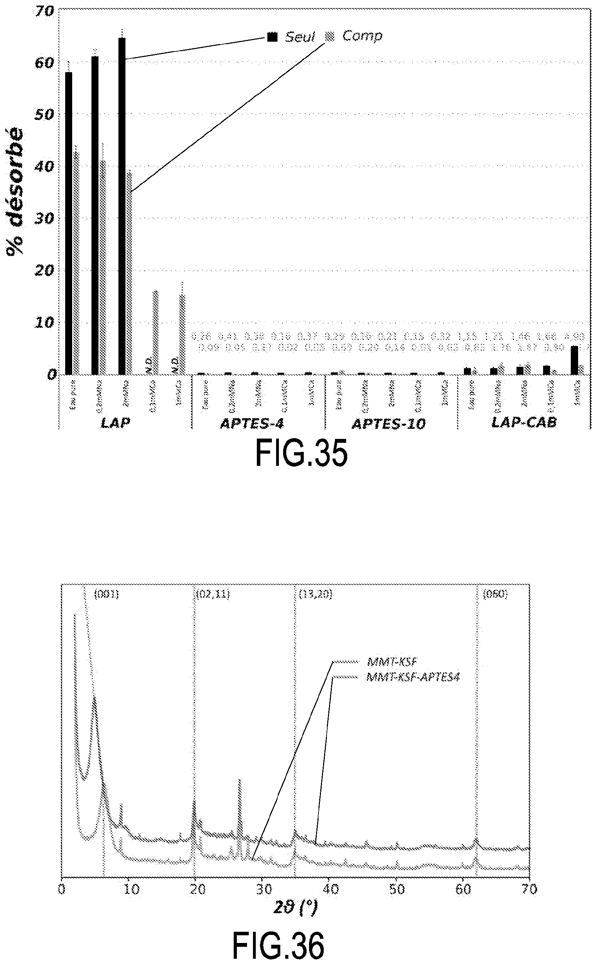

L'impact de la compétition sur le relargage a été analysé sur le Co (Figure 19). On remarque que sur la LAP, le taux de relargage est significativement plus important en modalité seul par rapport à la modalité compétition. Ce sont les seuls échantillons pour lesquels la différence est significative. En effet pour les autres matériaux adsorbants et quel que soit la solution de relargage testée, le relargage est du même ordre de grandeur (Figure 35).

Il est intéressant de constater que la faible capacité de désorption du Co observée dans des conditions de pH autour de la neutralité sur l'APTES4, l'APTES10 et dans une moindre mesure sur la LAP-CAB, est aussi bien observée pour le Co seul ou en compétition avec les autres radionucléides.

Plusieurs hypothèses sont confirmées par ces résultats, et notamment en ce qui concerne les mécanismes d'adsorption qui ont été proposés. Ainsi, l'adsorption du Sr sur tous les matériaux a été modélisée comme étant un échange cationique. Or, on note une très faible désorption du Sr dans l'eau pure, et dès que la concentration en sel augmente, le relargage du Sr augmente d'autant.

Pour la LAP chargée en Co mise en contact avec un milieu aqueux dépourvu de Co, un équilibre s'établit entre la concentration en Co dans le solide et dans la solution, on ne peut donc pas considérer l'adsorption du Co sur la LAP comme étant durable. Les interactions physiques (chélation, complexation) gouvernant l'adsorption du Co sur les deux argiles greffées sont visiblement nettement plus stables, en effet le relargage est très faible (quantités désorbées peu significatives). De fait, durant les expérimentations réalisées, l'adsorption du Co sur les argiles greffées apparaît comme étant très stable et peu sujette au relargage.

### 7) Potentiel d'adsorption d'autres matériaux lamellaires greffés

Afin de mieux définir le périmètre du brevet envisagé, des tests ont été effectués sur une montmorillonite commerciale, la MMT-KSF. Cette dernière a été greffée dans des conditions identiques à celles de la LAP.

Les diffractogrammes des rayons X de la MMT-KSF et de la MMT-KSF greffée sont présentés en Figure 36. On peut remarquer que la distance basale de l'hybride greffé est plus élevée que celle de la MMT-KSF brute (Figure 36). Elles sont respectivement de 18,04 et 13,60 Å soit une augmentation de 4,44 Â, nettement plus importante que celle observée sur la LAP (i.e. + 2,7 Å). Aucune autre modification n'est observée.

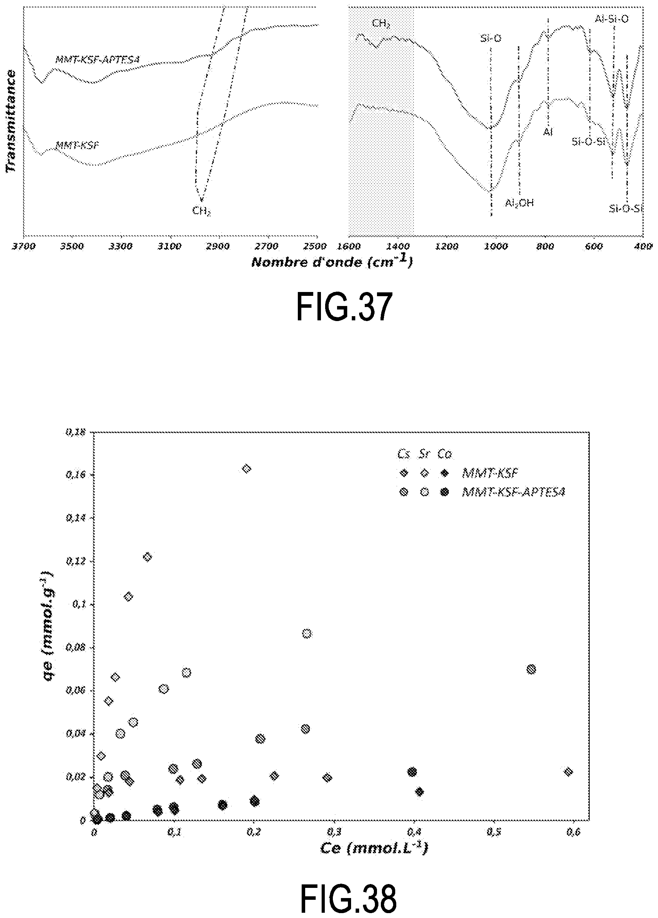

Les spectres IRTF de ces deux matériaux présentent des bandes d'absorption caractéristiques légèrement différentes de celles de la LAP et ont été indexés d'après les résultats obtenus par Molu and Yurdakoç (2010). Après greffage, on peut noter une intensité plus importante des bandes d'absorption des CH₂ sans autre modification notable. Ces bandes d'absorption sont toutefois faiblement visibles (Figure 37).

Les propriétés d'adsorption des radionucléides en compétition par ces deux matériaux sont présentées en Figure 38. Pour les deux adsorbants, la capacité d'adsorption du Sr est assez significative mais demeure très inférieure à celle observé sur les hybrides de LAP. Ainsi, les capacités d'adsorptions maximales sont de 0,165 et 0,09 mmol.g⁻¹ pour la MMT-KSF et la MMT-KSF greffée. Les capacités d'adsorption du Co et du Cs sont encore plus faibles, et on n'observe aucun effet significatif du greffage sur l'adsorption du Co (Figure 38).

Ainsi, même si ces résultats d'adsorption obtenus sur ces deux adsorbants restent préliminaires, on peut tout de même s'accorder sur le fait que dans des conditions optimisées, la MMT-KSF et la MMT-KSF greffée ne seront pas des matériaux de choix pour obtenir des capacités d'adsorption significatives pour les radionucléides étudiés.

### 8) Conclusion

Les expérimentations supplémentaires menées ont permis de confirmer le mode de greffage/intercalation ainsi que le bon déroulé des synthèses par des techniques plus fines que celles utilisées auparavant. L'estimation des taux de greffage par ATG les analyses par RMN permettent également de comparer les différentes synthèses entre elles. La synthèse de ces nouveaux hybrides greffés répondait à une nécessité d'améliorer le coût et/ou l'efficacité de la synthèse afin d'envisager l'utilisation de cette dernière à des échelles plus conséquentes.

Par rapport à l'hybride initial, la quantité de solvant utilisé a été divisée par 4 sans affecter les propriétés du matériau synthétisé. L'ajout de soude impacte également le mode de greffage, mais ne présente que peu d'intérêt par rapport aux objectifs. Le remplacement de l'éthanol par du glycérol semble donner satisfaction mais mérite des analyses approfondis. Enfin, l'augmentation de la quantité de greffons lors de la synthèse ne présente pas d'intérêt particulier quant aux propriétés d'adsorption de l'hybride résultant, il semble donc plus approprié de tenter des greffages avec une quantité moindre d'APTES, afin de déterminer un ratio LAP/APTES optimal.

Toutes les expérimentations concordent sur un point, la LAP greffée avec de l'APTES présente des propriétés d'adsorption exceptionnelles, pérennes et sélectives vis-à-vis du Co, et très significatives pour le Sr. Les premiers tests réalisés sur une montmorillonite commerciale, greffée ou non n'apportent pas satisfaction. En effet, l'utilisation de ces matériaux ne permet pas des capacités d'adsorption équivalentes à celles observées sur avec la LAP greffé ou non.

A la lumière des résultats accumulés, il apparaît que la LAP, de par ses propriétés spécifiques, et notamment son facteur de forme, permet de maximiser les taux de greffage ainsi que l'adsorption des radionucléides étudiés.

A la vue de la grande quantité de résultats concordants, la LAP modifiée par greffage ou intercalation est donc un matériau indiqué pour répondre au besoin de l'adsorption de certains radionucléides.

### Exemple 3 :

L'évolution de la structure du matériau hybride suite à une irradiation par faisceau ionisant a été testée. Le matériau hybride utilisé dans le cadre de cet essai correspond à une laponite greffée avec un APTES, correspondant à la LAP-APTES selon l'exemple 1.

De sorte à évaluer la stabilité du matériau hybride, différents essais d'irradiation par faisceau d'électrons ont été réalisés sur 3 échantillons d'un même lot en faisant varier la dose de rayonnement perçue. Les différents échantillons ont été conditionnés dans un sachet de polyéthylène de dimension 15×30 cm contenant chacun environ 100 g de matériau hybride. Les 3 échantillons ont été irradiés par un faisceau d'électron de 2,2 MeV, à température ambiante, les mesures de dose ont été réalisées par dosimétrie RPE/Alanine de manière traçable à un étalon international.

Les différentes doses absorbées par les 3 échantillons sont les suivantes :
- 53,4 kGy (± 3%)
- 156,1 kGy (± 5,2%)
- 208,2 kGy (± 6%)

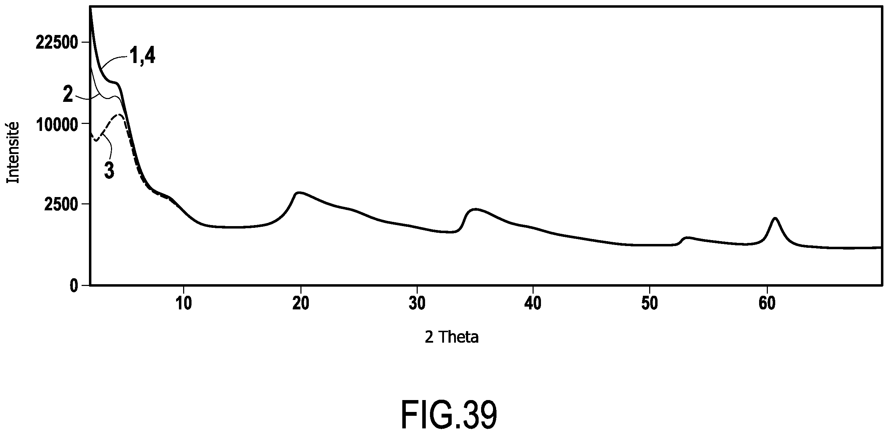

Une analyse de la structure de ces derniers a été réalisée par diffraction de rayons X. Les différents diffractogrammes sont présentés sur la figure 39 (les références numériques 1 et 4 correspondent aux échantillons soumis aux irradiations 53,4 kGy et 208,2 kGy, la référence 2 correspond à l'échantillon non irradié et la référence 3 correspond à l'échantillon irradié à 156,1 kGy). On remarque très peu de variation pour chacune des différentes réflexions obtenues pour les échantillons irradiés en comparaison du diffractogramme de l'échantillon non irradié.

Seule la réflexion associée à la d001 parait mieux définie pour l'échantillon irradié avec une dose de 150 kGy environ. Pour autant, la structure lamellaire des échantillons reste présente, il n'y a pas d'effondrement de la structure du matériau hybride suite à son irradiation, et ceci quelle que soit la dose perçue par ce dernier.

Cette étude a notamment permis de mettre en évidence un changement de couleur des différents échantillons, lesdits échantillons passant d'une couleur blanche à une coloration orange suite à leur irradiation visible à l'oeil nu.

Ce changement de couleur des échantillons en présence de radioactivité, permet de mettre en évidence la possibilité d'utiliser le matériau hybride selon la présente invention comme outil de détection de radioactivité dans un effluent et en particulier comme outil de détection de cations métalliques radioactifs, de préférence des isotopes radioactifs de cations de Co, Cs et Sr dans ledit effluent.

### Références Bibliographiques

Abdel-Karim, A.-A.M., Zaki, A.A., Elwan, W., El-Naggar, M.R., Gouda, M.M., 2016. Experimental and modeling investigations of cesium and strontium adsorption onto clay of radioactive waste disposal. Appl. Clay Sci. 132, 391-401.

Alba, M.D., Becerro, A.I., Castro, M.A., Perdigón, A.C., 2000. High-resolution 1H MAS NMR spectra of 2:1 phyllosilicates. Chem. Commun. 0, 37-38.

Al-Shahrani, S.S., 2014. Treatment of wastewater contaminated with cobalt using Saudi activated bentonite. Alex. Eng. J. 53, 205-211.

Delevoye, L., Robert, J.-L., Grandjean, J., 2003. 23Na 2D 3QMAS NMR and 29Si, 27Al MAS NMR investigation of Laponite® and synthetic saponites of variable interlayer charge. Clay Miner. 38, 63-69.

De Oliveira, T., Guégan, R., Thiebault, T., Milbeau, C.L., Muller, F., Teixeira, V., Giovanela, M., Boussafir, M., 2017. Adsorption of diclofenac onto organoclays: Effects of surfactant and environmental (pH and temperature) conditions. J. Hazard. Mater., Special Issue on Emerging Contaminants in engineered and natural environment 323, Part A, 558-566.

Durrant, C.B., Begg, J.D., Kersting, A.B., Zavarin, M., 2018. Cesium sorption reversibility and kinetics on illite, montmorillonite, and kaolinite. Sci. Total Environ. 610-611, 511-520.

Ghadiri, M., Chrzanowski, W., Rohanizadeh, R., 2015. Biomedical applications of cationic clay minerais. RSC Adv. 5, 29467- 29481.

Guégan, R., Giovanela, M., Warmont, F., Motelica-Heino, M., 2015. Nonionic organoclay: A 'Swiss Army knife' for the adsorption of organic micro-pollutants? J. Colloid Interface Sci. 437, 71-79.

Guimarâes, V., Azenha, M., Rocha, F., Silva, F., Bobos, I., 2015. Influence of pH, concentration and ionic strength during batch and flow-through continuous stirred reactor experiments of Sr2+-adsorption onto montmorillonite. J. Radioanal. Nucl. Chem. 303, 2243-2255.

Gutierrez, M., Fuentes, H.R., 1991. Competitive adsorption of cesium, cobalt and strontium in conditioned clayey soil suspensions. J. Environ. Radioact. 13, 271-282.

Hashemian, S., Saffari, H., Ragabion, S., 2015. Adsorption of Cobalt(II) from Aqueous Solutions by Fe3O4/Bentonite Nanocomposite. Water. Air. Soil Pollut. 226, 2212.

He, H., Duchet, J., Galy, J., Gerard, J.-F., 2005. Grafting of swelling clay materials with 3-aminopropyltriethoxysilane. J. Colloid Interface Sci. 288, 171-176.

Jolin, W.C., Kaminski, M., 2016. Sorbent materials for rapid remediation of wash water during radiological event relief.

Chemosphere 162, 165-171. doi:10.1016/j.chemosphere.2016.07.077

Kaygun, A.K., Eral, M., Erenturk, S.A., 2017. Removal of cesium and strontium using natural attapulgite: evaluation of adsorption isotherm and thermodynamic data. J. Radioanal. Nucl. Chem. 311, 1459-1464.

Khan, S.A., Riaz-ur-Rehman, Khan, M.A., 1995. Sorption of strontium on bentonite. Waste Manag. 15, 641-650.

Kim, J.-O., Lee, S.-M., Jeon, C., 2014. Adsorption characteristics of sericite for cesium ions from an aqueous solution. Chem. Eng.

Res. Des. 92, 368-374. doi:10.1016/j.cherd.2013.07.020

Kubilay, 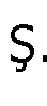 ., Gürkan, R., Savran, A., 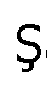 ahan, T., 2007. Removal of Cu(II), Zn(II) and Co(II) ions from aqueous solutions by adsorption onto natural bentonite. Adsorption 13, 41-51.

Kubies, D., Jérôme, R., Grandjean, J., 2002. Surfactant Molecules Intercalated in Laponite® as Studied by 13C and 29Si MAS NMR. Langmuir 18, 6159-6163.

Lagaly, G., 1986. Interaction of alkylamines with different types of layered compounds. Solid State Ion. 22, 43-51.

Limousin, G., Gaudet, J.-P., Charlet, L., Szenknect, S., Barthès, V., Krimissa, M., 2007. Sorption isotherms: A review on physical bases, modeling and measurement. Appl. Geochem. 22, 249-275.

Limousy, L., Mahzoul, H., Hamon, L., Siffert, B., 2001. Determination by zetametry and 'streaming induced potential' measurements of the amounts of catalytic precursors necessary to saturate a support. Colloids Surf. Physicochem. Eng. Asp. 181, 91-97.

Long, H., Wu, P., Zhu, N., 2013. Evaluation of Cs+ removal from aqueous solution by adsorption on ethylamine-modified montmorillonite. Chem. Eng. J. 225, 237-244. doi:10.1016/j.cej.2013.03.088.

Luo, W., Inoue, A., Hirajima, T., Sasaki, K., 2017. Synergistic effect of Sr2+ and ReO4- adsorption on hexadecyl pyridinium- modified montmorillonite. Appl. Surf. Sci. 394, 431-439.

Ma, B., Oh, S., Shin, W.S., Choi, S.-J., 2011. Removal of Co2+, Sr2+ and Cs+ from aqueous solution by phosphate-modified montmorillonite (PMM). Desalination 276, 336-346.

Mahmoud, M.R., Rashad, G.M., Metwally, E., Saad, E.A., Elewa, A.M., 2017. Adsorptive removal of 134Cs+, 60Co2+ and 152+154Eu3+ radionuclides from aqueous solutions using sepiolite: Single and multi-component systems. Appl. Clay Sci. 141, 72-80.

Martin, C., Pignon, F., Piau, J.-M., Magnin, A., Lindner, P., Cabane, B., 2002. Dissociation of thixotropic clay gels. Phys. Rev. E 66, 021401.

McLauchlin, A.R., Thomas, N.L., 2008. Preparation and characterization of organoclays based on an amphoteric surfactant. J. Colloid Interface Sci. 321, 39-43.

Metwally, S.S., Ahmed, I.M., Rizk, H.E., 2017. Modification of hydroxyapatite for removal of cesium and strontium ions from aqueous solution. J. Alloys Compd. 709, 438-444.

Missana, T., Garcia-Gutierrez, M., Alonso, U., 2008. Sorption of strontium onto illite/smectite mixed clays. Phys. Chem. Earth Parts ABC, Clays in Natural & Engineered Barriers for Radioactive Waste Confinement 33, S156-S162.

Molu, Z.B., Yurdakoç, K., 2010. Preparation and characterization of aluminum pillared K10 and KSF for adsorption of trimethoprim. Microporous Mesoporous Mater. 127, 50-60.

Mukai, H., Hirose, A., Motai, S., Kikuchi, R., Tanoi, K., Nakanishi, T.M., Yaita, T., Kogure, T., 2016a. Cesium adsorption/desorption behavior of clay minerais considering actual contamination conditions in Fukushima. Sci. Rep. 6, srep21543.

Mukai, H., Motai, S., Yaita, T., Kogure, T., 2016b. Identification of the actual cesium-adsorbing materials in the contaminated Fukushima soil. Appl. Clay Sci. 121, 188-193.

Negrete Herrera, N., Letoffe, J.-M., Reymond, J.-P., Bourgeat-Lami, E., 2005. Silylation of laponite® clay particles with monofunctional and trifunctional vinyl alkoxysilanes. J. Mater. Chem. 15, 863-871.

Omar, H., Arida, H., Daifullah, A., 2009. Adsorption of 60Co radionuclides from aqueous solution by raw and modified bentonite.Appl. Clay Sci. 44, 21-26.

Pálková, H., Madejovà, J., Zimowska, M., Serwicka, E.M., 2010. Laponite® - derived porous clay heterostructures: II. FTIR study of the structure évolution. Microporous Mesoporous Mater. 127, 237-244.

Parolo, M.E., Savini, M.C., Vallés, J.M., Baschini, M.T., Avena, M.J., 2008. Tetracycline adsorption on montmorillonite: pH and ionic strength effects. Appl. Clay Sci. 40, 179-186.

Rashad, G.M., Mahmoud, M.R., Elewa, A.M., Metwally, E., Saad, E.A., 2016. Removal of radiocobalt from aqueous solutions by adsorption onto low-cost adsorbents. J. Radioanal. Nucl. Chem. 309, 1065-1076.

Sayed, M.A., Helal, A.I., Abdelwahab, S.M., Aly, H.F., 2017. Sorption of cesium from aqueous solutions by some Egyptian pottery materials. Appl. Clay Sci. 139, 1-8.

Sdiri, A., Higashi, T., Hatta, T., Jamoussi, F., Tase, N., 2011. Evaluating the adsorptive capacity of montmorillonitic and calcareous clays on the removal of several heavy metals in aqueous systems. Chem. Eng. J. 172, 37-46.

Su, L., Tao, Q., He, H., Zhu, J., Yuan, P., Zhu, R., 2013. Silylation of montmorillonite surfaces: Dependence on solvent nature. J. Colloid Interface Sci. 391, 16-20.

Thiebault, T., Boussafir, M., Guégan, R., Le Milbeau, C., Le Forestier, L., 2016. Clayey-sand filter for the removal of pharmaceuticals from wastewater effluent: percolation experiments. Environ. Sci. Water Res. Technol. 2, 529-538.

Thiebault, T., Guégan, R., Boussafir, M., 2015. Adsorption mechanisms of emerging micro-pollutants with a clay mineral: Case of tramadol and doxepine pharmaceutical products. J. Colloid Interface Sci. 453, 1-8.

Tiwari, D., Lalhmunsiama, Choi, S.I., Lee, S.M., 2014. Activated Sericite: An Efficient and Effective Natural Clay Material for Attenuation of Cesium from Aquatic Environment. Pedosphere 24, 731-742.

Uddin, M.K., 2017. A review on the adsorption of heavy metals by clay minerais, with special focus on the past decade. Chem.

Eng. J. 308, 438-462. doi:10.1016/j.cej.2016.09.029

Wang, X., Tan, X., Chen, C., Chen, L., 2005. The concentration and pH dependent diffusion of 137Cs in compacted bentonite by using capillary method. J. Nucl. Mater. 345, 184-191.

Wu, P., Dai, Y., Long, H., Zhu, N., Li, P., Wu, J., Dang, Z., 2012. Characterization of organo-montmorillonites and comparison for Sr(II) removal: Equilibrium and kinetic studies. Chem. Eng. J. 191, 288-296.

Yu, S., Mei, H., Chen, X., Tan, X., Ahmad, B., Alsaedi, A., Hayat, T., Wang, X., 2015. Impact of environmental conditions on the sorption behavior of radionuclide 90Sr(II) on Na-montmorillonite. J. Mol. Liq. 203, 39-46.

## Revendications

1. Matériau hybride organique-inorganique adsorbant apte à adsorber des cations métalliques, de préférence des cations métalliques radioactifs d'effluents nucléaire de Co, Cs et Sr, le dit matériau hybride comprenant un support d'argile à structure lamellaire comprenant des nanoparticules en forme de feuillets multicouches avec des cations Na⁺ dans les espaces entre les dites nanoparticules en liaisons électrostatiques avec des charges négatives de dites nanoparticules, dénommés espaces interfoliaires, les dites nanoparticules étant constituées chacune de plusieurs couches empilées dont au moins une couche de composés de Si, et au moins une couche comprenant des dites charges négatives, **caractérisé en ce que** ledit matériau comprend un support d'argile à structure lamellaire de formule Na_{0.7}[(Mg_{5.5}, Li_{0.3})Si₄O₁₀(OH)₂]₂ constitué de dites nanoparticules en forme de feuillets multicouches constitués chacun de 3 couches empilées dont une couche dénommée octaédrique de composés (Mg,Li)O₆ comprenant des dites charges négatives, disposée entre deux couches dénommées tétraédriques de composés SiO₄ , la dite argile étant modifiée chimiquement par :
greffage d'au moins un greffon comprenant au moins une molécule organique apte à établir une liaison covalente avec un atome Si d'une dite couche de nanoparticule, et comprenant en outre au moins un groupe organique fonctionnel apte à complexer un dit cation métallique d'effluent, dans lequel ledit greffon comprend un reste de molécule organique R-Si (OR')₃ dans lequel:
(a) le groupe silyle de formule -Si (OR')₃ comprend au moins l'un des R' qui est un groupe apte à être hydrolysé pour qu'au moins un atome O du dit groupe silyle soit engagé dans une dite liaison covalente Si-O-Si, et
(b) R est un alkyle ou aryle substitué par au moins un groupe -NH₂,
ledit matériau présentant un taux de greffage de dits greffons sur le support d'argile de 0.1 à 0.55 mmole/g mesuré par thermogravimétrie sous atmosphère d'air et avec une augmentation de la température de l'ordre de 2°C par minute de 30 à 900°C.

2. Matériau hybride organique-inorganique adsorbant selon la revendication 1, caractérisé en ce ledit greffon a pour formule NH₂-alk-Si(OR')₃, R' étant des groupes alkyle identiques ou différents en C1 ou C2 et alk étant un alkyle en C1 à C7, de préférence en C2 ou C3.

3. Matériau hybride organique-inorganique adsorbant selon la revendication 2, **caractérisé en ce que** ledit greffon est un reste de 3-aminopropyl-triéthoxysilane.

4. Matériau hybride organique-inorganique adsorbant selon l'une des revendications 1 à 3 **caractérisé en ce que** la dite argile est modifiée chimiquement par intercalation dans l'espace interfoliaire entre deux dites nanoparticules d'au moins une molécule organique d'agent intercalant comprenant un groupe organique cationique établissant une liaison électrostatique avec une charge négative d'une dite couche de nanoparticule et un groupe organique anionique apte à établir une liaison ionique avec un dit cation métallique d'effluent.

5. Matériau hybride organique-inorganique adsorbant selon la revendication 4, **caractérisé en ce que** la dite molécule d'agent intercalant est une molécule tensioactive amphotère comprenant une chaine hydrocarbonée en C7 à C14 comprenant au moins un groupe anionique apte à établir une liaison ionique avec un dit cation métallique d'effluent et au moins un groupe cationique établissant une liaison électrostatique avec une charge négative de dite nanoparticule.

6. Matériau hybride organique-inorganique adsorbant selon la revendication 5, **caractérisé en ce que** la dite molécule d'agent intercalant est une molécule tensioactive comprenant une chaine hydrocarbonée en C7 à C14 comprenant au moins un dit groupe organique anionique carboxylate COO⁻ et au moins un dit groupe organique cationique qui comprend un groupe amine quaternaire.

7. Matériau hybride organique-inorganique adsorbant selon la revendication 6, **caractérisé en ce que** la dite molécule d'agent intercalant est alkyl-amido-alkyl de bétaïne de formule alk1-CONH-alk2-N⁺(R₁,R₂)-COO- , alk1 étant un alkyle en C7 à C14 et alk2 étant un alkyle en C1 à C7, R₁,R₂ étant des groupes alkyle en C1 à C7.

8. Matériau hybride organique-inorganique adsorbant selon la revendication 7, **caractérisé en ce que** la dite molécule d'agent intercalant est la coca amido propyl de betaïne CH₃-(CH₂)₁₀-CONH-(CH₂)₃-N⁺(CH₃)₂COO⁻.

9. Matériau hybride organique-inorganique adsorbant selon l'une des revendications 1 à 3, **caractérisé en ce qu'**il comprend une dite argile modifiée uniquement par un dit greffage d'une pluralité de dits greffons.

10. Matériau hybride organique-inorganique adsorbant selon l'une des revendications 4 à 8, **caractérisé en ce qu'**il comprend un mélange de (a) une dite argile modifiée par un dit greffage d'une pluralité de dits greffons, et (b) une dite argile modifiée par une dite intercalation d'au moins une dite molécule d'agent intercalant tensioactive.

11. Procédé de décontamination d'effluent et / ou de détection de cations métalliques radioactifs, de préférence des isotopes radioactifs de cations de Co, Cs et Sr dans ledit effluent à l'aide d'un matériau hybride organique-inorganique adsorbant solide selon l'une des revendications 1 à 10 dans lequel on met en contact le dit effluent avec le dit matériau hybride pour fixer par adsorption sur le dit matériau hybride des cations métalliques contenus dans le dit effluent, de préférence des isotopes radioactifs de cations de Co, Cs et Sr, et dans lequel la présence de cations métalliques radioactifs dans l'effluent est détectée par un changement de couleur du matériau hybride du blanc au orange visible à l'œil nu.

12. Procédé selon la revendication 11, **caractérisé en ce que** la dite solution d'effluent est un effluent de l'industrie nucléaire et ledit cation métallique polluant que l'on fixe est un isotope radioactif de cations de Co ou Sr, de préférence encore Co.

## Patentansprüche

1. Adsorbierendes organisch-anorganisches Hybridmaterial, das geeignet ist, Metallkationen, vorzugsweise radioaktive Metallkationen Co, Cs und Sr aus nuklearen Effluenten, zu adsorbieren, wobei das Hybridmaterial einen Ton-Träger mit lamellarer Struktur umfasst, der Nanopartikel in Form von mehrlagigen Plättchen umfasst, mit Na⁺-Kationen in den Räumen zwischen den Nanopartikeln, die als interfoliäre Räume bezeichnet werden, in elektrostatischen Bindungen mit negativen Ladungen der Nanopartikel, wobei die Nanopartikel jeweils aus mehreren aufeinander geschichteten Schichten bestehen, darunter zumindest eine Schicht aus Si-Verbindungen, und zumindest eine Schicht umfassend die negativen Ladungen, **dadurch gekennzeichnet, dass** das Material einen Ton-Träger mit lamellarer Struktur der Formel Na_{0.7}[(Mg_{5.5}, Li_{0.3})Si₄O₁₀(OH)₂]₂ umfasst, der aus den Nanopartikeln in Form von mehrlagigen Plättchen besteht, die jeweils aus 3 aufeinander geschichteten Schichten bestehen, darunter eine als oktaedrisch bezeichnete Schicht aus (Mg,Li)O₆-Verbindungen, welche die negativen Ladungen umfassen, die zwischen zwei als tetraedrisch bezeichneten Schichten aus SiO₄ -Verbindungen angeordnet ist, wobei der Ton chemisch modifiziert ist durch:
Aufpropfen zumindest einer Pfropfeinheit, die zumindest ein organisches Molekül umfasst, das geeignet ist, eine kovalente Bindung mit einem Si-Atom einer Nanopartikel-Schicht einzugehen, und ferner zumindest eine organische funktionelle Gruppe umfasst, die geeignet ist, mit einem Metallkation des Effluenten einen Komplex zu bilden, wobei die Pfropfeinheit einen organischen Molekülrest R-Si (OR')₃ umfasst, wobei:
(a) die Silyl-Gruppe der Formel -Si(OR')₃ zumindest einen der R's umfasst, der eine Gruppe ist, die geeignet ist, so hydrolysiert zu werden, dass zumindest ein O-Atom der Silyl-Gruppe an einer kovalenten Bindung Si-O-Si beteiligt ist, und
(b) R ein Alkyl oder Aryl ist, das mit zumindest einer NH₂-Gruppe substituiert ist,
wobei das Material eine Pfropfrate der Pfropfeinheiten auf dem Ton-Träger von 0,1 bis 0,55 mmol/g aufweist, gemessen durch Thermogravimetrie unter Luftatmosphäre und mit einer Temperaturerhöhung in der Größenordnung von 2 °C pro Minute von 30 auf 900 °C.

2. Adsorbierendes organisch-anorganisches Hybridmaterial nach Anspruch 1, **dadurch gekennzeichnet, dass** die Pfropfeinheit die Formel NH₂-alk-Si(OR')₃ hat, wobei R' identische oder unterschiedliche C1- oder C2-Alkylgruppen sind und alk ein C1- bis C7-, vorzugsweise ein C2- oder C3-Alkyl ist.

3. Adsorbierendes organisch-anorganisches Hybridmaterial nach Anspruch 2, **dadurch gekennzeichnet, dass** die Pfropfeinheit ein Rest von 3-Aminopropyltriethoxysilan ist.

4. Adsorbierendes organisch-anorganisches Hybridmaterial nach einem der Ansprüche 1 bis 3, **dadurch gekennzeichnet, dass** der Ton durch Interkalieren zumindest eines organischen Interkalationsmittel-Moleküls, umfassend eine kationische organische Gruppe, die eine elektrostatische Bindung mit einer negativen Ladung einer Nanopartikelschicht eingeht, und eine anionische organische Gruppe, die geeignet ist, eine lonenbindung mit einem Metallkation des Effluenten einzugehen, in den interfoliären Raum zwischen zwei Nanopartikeln chemisch modifiziert ist.

5. Adsorbierendes organisch-anorganisches Hybridmaterial nach Anspruch 4, **dadurch gekennzeichnet, dass** das Interkalationsmittel-Molekül ein amphoteres oberflächenaktives Molekül ist, das eine C7- bis C14-Kohlenwasserstoffkette umfasst, die zumindest eine anionische Gruppe, die geeignet ist, eine lonenbindung mit einem Metallkation des Effluenten einzugehen, und zumindest eine kationische Gruppe, die eine elektrostatische Bindung mit einer negativen Ladung des Nanopartikels eingeht, umfasst.

6. Adsorbierendes organisch-anorganisches Hybridmaterial nach Anspruch 5, **dadurch gekennzeichnet, dass** das Interkalationsmittel-Molekül ein oberflächenaktives Molekül ist, das eine C7- bis C14-Kohlenwasserstoffkette umfasst, die zumindest eine anionische organische Carboxylat- bzw. COO⁻-Gruppe und zumindest eine kationische organische Gruppe umfasst, die eine quaternäre Aminogruppe umfasst.

7. Adsorbierendes organisch-anorganisches Hybridmaterial nach Anspruch 6, **dadurch gekennzeichnet, dass** das Interkalationsmittel-Molekül Alkylamidalkyl-Betain der Formel alk1-CONH-alk2-N⁺(R₁,R₂)-COO- ist, wobei alk1 ein C7- bis C14-Alkyl ist und alk2 ein C1- bis C7-Alkyl ist, wobei R₁,R₂ C1- bis C7-Alkylgruppen sind.

8. Adsorbierendes organisch-anorganisches Hybridmaterial nach Anspruch 7, **dadurch gekennzeichnet, dass** das Interkalationsmittel-Molekül Cocoamidopropyl-Betain CH₃-(CH₂)₁₀-CONH-(CH₂)₃-N⁺(CH₃)₂-COO⁻ ist.

9. Adsorbierendes organisch-anorganisches Hybridmaterial nach einem der Ansprüche 1 bis 3, **dadurch gekennzeichnet, dass** es einen Ton umfasst, der ausschließlich durch ein Aufpfropfen mehrerer der Pfropfeinheiten modifiziert ist.

10. Adsorbierendes organisch-anorganisches Hybridmaterial nach einem der Ansprüche 4 bis 8, **dadurch gekennzeichnet, dass** es eine Mischung umfasst von (a) einem Ton, der durch ein Aufpfropfen mehrerer der Pfropfeinheiten modifiziert ist, und (b) einem Ton, der durch eine Interkalation von zumindest einem oberflächenaktiven Interkalationsmittel-Molekül modifiziert ist.

11. Verfahren zur Dekontamination von Effluenten und/oder zum Nachweis von radioaktiven Metallkationen, vorzugsweise radioaktiven Isotopen der Kationen Co, Cs und Sr in dem Effluenten, mithilfe eines festen, adsorbierenden organischanorganischen Hybridmaterials nach einem der Ansprüche 1 bis 10, wobei der Effluent mit dem Hybridmaterial in Kontakt gebracht wird, um in dem Effluenten enthaltene Metallkationen durch Adsorption an dem Hybridmaterial zu fixieren, vorzugsweise radioaktive Isotopen der Kationen Co, Cs und Sr, und wobei das Vorhandensein von radioaktiven Metallkationen in dem Effluenten durch eine für das bloße Auge sichtbare Farbänderung des Hybridmaterials von Weiß auf Orange nachgewiesen wird.

12. Verfahren nach Anspruch 11, **dadurch gekennzeichnet, dass** die Effluentenlösung ein Effluent der Nuklearindustrie ist und das umweltschädliche Metallkation, das fixiert wird, ein radioaktives Isotop der Kationen Co oder Sr, vorzugsweise Co, ist.

## Claims

1. An organic-inorganic hybrid adsorbent material capable of adsorbing metal cations, preferably radioactive metal cations from Co, Cs and Sr nuclear effluents, the said hybrid material comprising a clay support with a lamellar structure comprising nanoparticles in the form of multilayer sheets with Na⁺ cations in the spaces between the said nanoparticles in electrostatic bonds with negative charges of said nanoparticles, called interlayer spaces, the said nanoparticles each consisting of several stacked layers, including at least one layer of Si compounds, and at least one layer comprising said negative charges, **characterized in that** said material comprises a clay support of lamellar structure of formula Na_{0.7}[(Mg_{5.5}, Li_{0.3})Si₄O₁₀(OH)₂]₂ made up of the said nanoparticles in the form of multilayer sheets each consisting of 3 stacked layers including one so-called octahedral layer of compound (Mg,Li)O₆ comprising the said negative charges, disposed between two so-called tetrahedral layers of SiO₄ compounds, said clay being chemically modified by:
grafting of at least one graft comprising at least one organic molecule capable of establishing a covalent bond with an Si atom of a said nanoparticle layer, and further comprising at least one organic functional group capable of complexing a said effluent metal cation, wherein said graft comprises an R-Si organic molecule residue (OR')₃ wherein:
(a) the silyl group of formula -Si (OR')₃ comprises at least one of R' which is a group capable of being hydrolyzed so that at least one O atom of said silyl group is engaged in a said Si-O-Si covalent bond, and
(b) R is an alkyl or aryl substituted with at least one -NH₂ group,
the said material having a rate of grafting of said grafts onto the clay support of 0.1 to 0.55 mmole/g measured by thermogravimetry in air atmosphere and with a temperature increase of the order of 2°C per minute from 30 to 900°C.

2. The organic-inorganic hybrid adsorbent material as claimed in claim 1, **characterized in that** said graft has the formula NH₂-alk-Si(OR')3, R' being identical or different C1 or C2 alkyl groups and alk being a C1 to C7, preferably a C2 or C3 alkyl.

3. The organic-inorganic hybrid adsorbent material as claimed in claim 2, **characterized in that** said graft is a 3-aminopropyltriethoxysilane residue.

4. The organic-inorganic hybrid adsorbent material as claimed in one of claims 1 to 3, **characterized in that** the said clay is chemically modified by intercalation in the interlayer space between two of said-nanoparticles of at least one intercalating agent organic molecule comprising an organic cationic group establishing an electrostatic bond with a negative charge of one said nanoparticle layer and an anionic organic group capable of establishing an ionic bond with said effluent metal cation.

5. The organic-inorganic hybrid adsorbent material as claimed in claim 4, **characterized in that** said intercalating agent molecule is an amphoteric surfactant molecule comprising a C7 to C14 hydrocarbon chain comprising at least one anionic group capable of establishing an ionic bond with a said effluent metal cation and at least one cationic group establishing an electrostatic bond with a negative charge of said nanoparticle.

6. The organic-inorganic hybrid adsorbent material as claimed in claim 5, **characterized in that** said intercalating agent molecule is a surfactant molecule comprising a C7 to C14 hydrocarbon chain comprising at least one said anionic organic carboxylate group COO⁻ and at least one said cationic organic group which comprises a quaternary amine group.

7. The organic-inorganic hybrid adsorbent material as claimed in claim 6, **characterized in that** said intercalating agent molecule is alkyl-amido-alkyl betaine of formula alk1-CONH-alk2-N⁺(R₁,R₂)-COO-, alk1 being a C7 to C14 alkyl and alk2 being a C1 to C7 alkyl, R₁,R₂ being C1 to C7 alkyl groups.

8. The organic-inorganic hybrid adsorbent material as claimed in claim 7, **characterized in that** said intercalating agent molecule is coca amido propyl betaine CH₃-(CH₂)₁₀-CONH-(CH₂)₃-N⁺(CH₃)₂-COO⁻.

9. The organic-inorganic hybrid adsorbent material as claimed in one of claims 1 to 3, **characterized in that** it comprises a said clay modified solely by a said grafting of a plurality of said grafts.

10. The organic-inorganic hybrid adsorbent material as claimed in one of claims 4 to 8, **characterized in that** it comprises a mixture of (a) a said clay modified by a said grafting of a plurality of said grafts, and (b) a said clay modified by a said intercalation of at least one said surfactant intercalating agent molecule.

11. A process for decontaminating effluent and/or for detecting radioactive metal cations, preferably radioactive isotopes of Co, Cs and Sr cations in said effluent using an organic-inorganic hybrid adsorbent solid material as claimed in one of claims 1 to 10 wherein the said effluent is brought into contact with the said hybrid material to fix by adsorption on the said hybrid material metal cations contained in the said effluent, preferably radioactive isotopes of Co, Cs and Sr cations, and wherein the presence of radioactive metal cations in the effluent is detected by a change in color of the hybrid material from white to orange visible to the naked eye.

12. The process as claimed in claim 11, **characterized in that** the said effluent solution is a nuclear industry effluent and the said polluting metal cation which is fixed is a radioactive isotope of Co or Sr cations, preferably Co.
